# EUROPÄISCHE PATENTSCHRIFT

(11) **EP 3 084 072 B1**
(45) Veröffentlichungstag und Bekanntmachung des Hinweises auf die Patenterteilung: **08.01.2020**
(21) Anmeldenummer: 14812225.2
(22) Anmeldetag: 12.12.2014
(51) Int. Cl.: D21F 1/00, B29C 65/16

(54) **GEWEBEBAND FÜR EINE FASERSTOFFBAHNMASCHINE**
WOVEN-FABRIC BELT FOR A FIBROUS-WEB MACHINE
BANDE DE TISSU POUR MACHINE DE PRODUCTION DE BANDES CONTINUES DE MATIÈRE FIBREUSE

(30) Priorität: 17.12.2013 DE 102013226324; 17.12.2013 US 201361917053 P
(43) Veröffentlichungstag der Anmeldung: 26.10.2016
(73) Patentinhaber: Voith Patent GmbH, 89522 Heidenheim (DE)
(72) Erfinder: JOU, Juanhao, 89518 Heidenheim (DE); QUIGLEY, Scott D., Bossier City, Louisiana 71111 (US)
(86) Internationale Anmeldenummer: PCT/EP2014/077532
(87) Internationale Veröffentlichungsnummer: WO 2015/091253

(56) Entgegenhaltungen:
- EP-A1- 1 749 924
- WO-A1-2004/055265
- WO-A1-2013/160194
- DE-A1-102010 043 458
- US-A- 4 501 782
- US-B2- 8 062 480

## Beschreibung

Die Erfindung gemäß Anspruch 1 betrifft ein Gewebeband das für den Einsatz in einer eine Faserstoffbahn herstellenden und/oder verarbeitenden Maschine, insbesondere einer Papier-, Karton-, Tissue- oder Non-Woven-Maschine geeignet ist.

Gewebebänder der gattungsgemäßen Art umfassen Längsfäden die mit Querfäden unter Ausbildung von Fadenkreuzungsstellen verwoben sind. Solche Gewebebänder sind in der Regel flach gewoben hergestellt und weisen eine Oberseite und eine dieser gegenüber liegende Unterseite auf. Bei bestimmungsgemäßer Verwendung solcher Gewebebänder in der Maschine verlaufen die Längsfäden in MD-Richtung und die Querfäden in CMD-Richtung der Maschine. Ferner weist die Oberseite zur Faserstoffbahn und die Unterseite zur Maschine. Zum Einsatz in einer eine Faserstoffbahn herstellenden und/oder verarbeitenden Maschine sind solche ursprünglich flach hergestellten Gewebebänder an einem Gewebenahtbereich endlos gemacht, so dass diese in der Maschine als Endlosbänder betrieben werden können. Ein solcher Gewebenahtbereich kann bspw. durch Längsfäden bereitgestellt sein, die im Bereich ihrer Längsfadenendabschnitte zurückgewoben sind um Nahtschlaufen auszubilden. Ein solcher Gewebenahtbereich kann auch durch bspw. jeweils paarweise zusammengeführte Längsfadenendabschnitte von Längsfäden gebildet sein, die unter Ausbildung eines oftmals dem flachgewobenen Gewebeanteil gleichen Nahtgewebes mit Querfäden -oftmals abschnittweise entlang eines gemeinsamen Webpfads- mit Querfäden gemeinsamen verwoben sind.

Die Zugfestigkeit der Naht ist bei den durch Nahtschlaufen wie auch bei den durch das Nahtgewebe bereitgestellten Gewebenahtbereichen unter anderem von der Anzahl der Querfäden abhängig, mit denen die Längsfadenendabschnitte beim Zurückweben verwoben sind bzw. von der Anzahl der Querfäden mit denen die zusammengeführten Längsfadenendabschnitte einem gemeinsamen Webpfad folgend gemeinsam verwoben sind. Die Festigkeit der Naht steigt hierbei mit wachsender Anzahl der Querfäden an, mit denen die Längsfadenendabschnitte verwoben sind. Durch das Zurückweben bzw. durch den gemeinsamen Webpfad werden aber oftmals physikalische Eigenschaften, wie bspw. Permeabilität und Dicke des Gewebebands, im Gewebenahtbereich beeinflusst, so dass diese physikalischen Eigenschaften im Gewebenahtbereich lokal unterschiedlich und unterschiedlich zum restlichen Teil des Gewebebandes sind.

Um eine hohe Zugfestigkeit einerseits und keine allzu große Änderung bspw. der Permeabilität und/oder Dicke des Gewebebands andererseits zu erreichen wird im Stand der Technik vorgeschlagen, die Längsfäden im Bereich ihrer Längsfadenendabschnitte an zumindest einigen Fadenkreuzungsstellen mit Querfäden stoffschlüssig zu verbinden.

So ist bspw. aus der US8,062,480 und der EP1749924 bekannt, die Längs- und die Querfäden an den Fadenkreuzungsstellen durch Einwirkung von Laserstrahlung mittels Verschweißen stoffschlüssig zu verbinden. Ähnliche Techniken werden auch in den Schriften DE 10 2010 043458, WO 2013/160194, US 4,501,782 sowie WO2004/055265 beschrieben.

Es hat sich nun aber gezeigt, dass die stoffschlüssige Verbindung -bspw. Schweißverbindung- der Längs- und Querfäden an den Fadenkreuzungsstellen oftmals nicht ausreichend haltbar ist. Wie Untersuchungen der Anmelderin gezeigt haben, tritt dieses Problem insbesondere bei Gewebebändern mit offener und/oder einlagiger Webstruktur auf. Zur Herstellung einer haltbareren Gewebenaht wurde deshalb vorgeschlagen ganze Bereiche des Gewebenahtabschnitts stoffschlüssig zu verbinden, was wiederum zu einer unerwünschten Steifigkeit des Gewebebands in seiner Längsrichtung führt.

Es ist daher die Aufgabe der vorliegenden Erfindung ein Gewebeband mit verbesserter stoffschlüssiger Verbindung von Längs- und Querfäden an Fadenkreuzungsstellen vorzuschlagen.

Die Aufgabe wird gelöst durch ein Gewebeband geeignet zum Einsatz in einer eine Faserstoffbahn herstellenden und/oder verarbeitenden Maschine, mit Längsfäden die mit Querfäden unter Ausbildung von Fadenkreuzungsstellen verwoben sind und mit einer Oberseite und einer dieser gegenüberliegenden Unterseite sowie einem Gewebenahtabschnitt. Bei dem erfindungsgemäßen Gewebeband hat jeder Längsfäden in seiner Länge betrachtet zwei endständige Längsfadenendabschnitte mit jeweiligem Fadenende. Der Gewebenahtabschnitt ist durch Verweben der Längsfadenendabschnitte mit als Gewebenaht-Querfäden bezeichneten Querfäden gebildet. Hierbei folgen zumindest einige der Längsfadenendabschnitte beim Verweben mit den Gewebenaht-Querfäden einem Webpfad, entlang dem der jeweilige Längsfadenendabschnitt in Richtung zu seinem Fadenende betrachtet mehrmals abwechselnd Flottierungen auf der Oberseite und Flottierungen auf der Unterseite ausbildet, wobei zwischen zwei unmittelbar benachbarten Flottierungen auf der Oberseite eine Flottierung auf der Unterseite und zwischen zwei unmittelbar benachbarten Flottierungen auf der Unterseite eine Flottierung auf der Oberseite angeordnet ist. Der Webpfad hat ferner eine vor dem Fadenende letzte Flottierung, die auf einer Seite von Ober- und Unterseite verläuft, wobei der Längsfadenendabschnitt im Anschluss an die letzte Flottierung vor dem Fadenende von der einen Seite von Ober- und Unterseite zur anderen Seite von Ober- und Unterseite wechselt. Ferner ist der Längsfadenendabschnitt an zumindest einer Fadenkreuzungsstelle mit einem Gewebenaht-Querfaden stoffschlüssig verbunden.

Die zumindest eine Fadenkreuzungsstelle, an welcher der Längsfadenendabschnitt stoffschlüssig mit einem Gewebenaht-Querfaden verbunden ist, ist in zumindest einer im Webpfad vor der letzten Flottierung liegenden Flottierung angeordnet. Untersuchungen der Anmelderin haben gezeigt, dass ein mangelnder Kontakt zwischen den Längsfadenendabschnitten und den Gewebenaht-Querfäden an den Fadenkreuzungsstellen bei der Herstellung der stoffschlüssigen Verbindung oftmals für eine mangelnde stoffschlüssige Verbindung verantwortlich ist. Untersuchungen der Anmelderin haben weiter ergeben, dass dieses Problem insbesondere dann auftritt, wenn die stoffschlüssige Verbindung an einer Fadenkreuzungsstelle in der letzten Flottierung vor dem Fadenende hergestellt ist, da an dieser Stelle der Längsfadenendabschnitt oftmals nicht mehr ausreichend unter Zugspannung steht, um damit während der Herstellung der stoffschlüssigen Verbindung an der Fadenkreuzungsstelle fest gegen den Gewebenaht-Querfaden gedrückt zu werden. Dadurch dass durch die Erfindung vorgeschlagen wird, zumindest eine Fadenkreuzungsstelle der zumindest einen Fadenkreuzungsstelle an welcher der Längsfadenendabschnitt stoffschlüssig mit einem Gewebenaht-Querfaden verbunden ist, in einer in seinem Webpfad vor der letzten Flottierung liegenden Flottierung anzuordnen, wird die stoffschlüssige Verbindung zwischen dem Längsfadenendabschnitt und zumindest einem Gewebenaht-Querfaden an einer Fadenkreuzungsstelle hergestellt, an welcher der Längsfadenendabschnitt noch unter ausreichender Zugspannung steht, um während der Herstellung der stoffschlüssigen Verbindung zuverlässig gegen den Gewebenaht-Querfaden gedrückt zu sein. Die stoffschlüssige Verbindung ist somit haltbar und fest und das erfindungsgemäße Gewebeband hat eine Naht mit hoher Festigkeit. Durch die Bereitstellung einer festen stoffschlüssigen Verbindung an den Fadenkreuzungsstellen, kann die Anzahl der stoffschlüssigen Verbindungsstellen deutlich reduziert werden bei gleichbleibender oder erhöhter Festigkeit gegenüber Gewebebändern mit "nicht selektierter" Auswahl der stoffschlüssig verbundenen Fadenkreuzungsstellen.

Es ist an dieser Stelle anzumerken, dass der jeweilige Längsfadenendabschnitt nachdem dieser im Anschluss an die letzte Flottierung von der einen Seite zur anderen Seite geführt ist, mit keinem weiteren Gewebenaht-Querfaden verwoben ist. Dies bedeutet, dass der Längsfadenendabschnitt vor seinem Fadenende nicht mehr von der anderen Seite von Ober- und Unterseite zur einen Seite von Ober- und Unterseite geführt ist.

Ein erster und ein zweiter Faden sind im Sinne der vorliegenden Erfindung miteinander verwoben, wenn der erste Faden den zweiten Faden auf einer Seite laufend kreuzt und der erste Faden vor und nach dem zweiten Faden jeweils zumindest einen weiteren Faden auf einer der einen Seite gegenüberliegenden anderen Seite kreuzt. Hierbei muss der zumindest eine weitere Faden nicht unmittelbar benachbart zum zweiten Faden angeordnet sein.

Eine Flottierung auf der Oberseite ist gebildet, indem der Längsfadenendabschnitt auf der Oberseite laufend einen oder mehrere unmittelbar benachbarte Gewebenaht-Querfäden kreuzt und eine Flottierung auf der Unterseite ist gebildet, indem der Längsfadenendabschnitt auf der Unterseite laufend einen oder mehrere unmittelbar benachbarte Gewebenaht-Querfäden kreuzt.

Im Rahmen der Erfindung kann davon ausgegangen werden, dass sich die Längsrichtung des Gewebebands und die Längsrichtung der Längsfäden parallel zueinander oder mit einer maximalen Abweichung von +/- 20° zueinander erstrecken. Im Rahmen der Erfindung kann ferner davon ausgegangen werden, dass sich die Querrichtung des Gewebebands und die Längsrichtung der Querfäden parallel zueinander oder mit einer maximalen Abweichung von +/- 20° zueinander erstrecken. Ferner erstrecken sich die Längsrichtung und die Querrichtung des Gewebebands im rechten Winkel zueinander.

Vorteilhafte Ausgestaltungen und Weiterbildungen der Erfindung sind in den Unteransprüchen angegeben.

Bei bestimmungsgemäßer Verwendung des Gewebebands in der Maschine verlaufen insbesondere die Längsfäden mit ihrer Längsrichtung in MD-Richtung und die Querfäden mit ihrer Längsrichtung in CMD-Richtung der Maschine, wobei die Oberseite zur Faserstoffbahn und die Unterseite zur Maschine weist.

Selbstverständlich ist es möglich, dass der jeweilige Längsfadenendabschnitt mit mehreren Gewebenaht-Querfäden stoffschlüssig verbunden ist. Eine Ausgestaltung der Erfindung sieht daher vor, dass im Webpfad der zumindest einigen Längsfadenendabschnitte der jeweilige Längsfadenendabschnitt mit weiteren Gewebenaht-Querfäden an Fadenkreuzungsstellen stoffschlüssig verbunden ist. Dies kann auch eine stoffschlüssige Verbindung zwischen Längsfadenendabschnitt und einem Gewebenaht-Querfaden in der letzten Flottierung im Webpfad des Längsfadenendabschnitts umfassen, solange gewährleistet ist, dass auch eine stoffschlüssige Verbindung in einer der letzten Flottierung vorangehenden Flottierung hergestellt ist.

Vorzugsweise ist hierbei der jeweilige Längsfadenendabschnitt mit mehreren Gewebenaht-Querfäden stoffschlüssig verbunden, die in zumindest einer im Webpfad vor der letzten Flottierung liegenden Flottierung angeordnet sind. Vorzugsweise ist der jeweilige Längsfadenendabschnitt mit allen Gewebenaht-Querfäden stoffschlüssig verbunden, die in einer im Webpfad vor der letzten Flottierung liegenden Flottierung angeordnet sind. Hierdurch ist eine einfache Herstellung der stoffschlüssigen Verbindung möglich, da die stoffschlüssige Verbindung an unmittelbar nebeneinander liegenden Gewebenaht-Querfäden hergestellt werden kann.

Nach einer bevorzugten Ausgestaltung der Erfindung ist vorgesehen, dass im Webpfad der zumindest einigen Längsfadenendabschnitte die zumindest eine Fadenkreuzungsstelle an welcher der jeweilige Längsfadenendabschnitt stoffschlüssig mit einem Gewebenaht-Querfaden verbunden ist, in zumindest einer der Flottierungen angeordnet ist, welche im Webpfad des Längsfadenendabschnitts eine der sechs, insbesondere vier Flottierungen ist, die der letzten Flottierung unmittelbar vorangehen. Durch diese Maßnahme wird erreicht, dass -wenn im Webpfad des jeweiligen Längsfadenendabschnitts nur an wenigen Fadenkreuzungsstellen eine stoffschlüssige Verbindung hergestellt wird- der Längsfadenendabschnitt in seinem Webpfad bis zum Fadenende keine zu große Strecke zurücklegt an welcher der Längsfadenendabschnitt nicht stoffschlüssig mit einem Gewebenaht-Querfaden verbunden ist.

Konkret kann in diesem Zusammenhang vorgesehen sein, dass im Webpfad der zumindest einigen Längsfadenendabschnitte die zumindest eine Fadenkreuzungsstelle an welcher der jeweilige Längsfadenendabschnitt stoffschlüssig mit einem Gewebenaht-Querfaden verbunden ist, in einer Flottierung angeordnet ist, welche eine der letzten Flottierung unmittelbar vorangehende vorletzte Flottierung ist. Alternativ oder zusätzlich kann vorgesehen sein, dass im Webpfad der zumindest einigen Längsfadenendabschnitte zumindest eine Fadenkreuzungsstelle, an welcher der jeweilige Längsfadenendabschnitt stoffschlüssig mit einem Gewebenaht-Querfaden verbunden ist, in einer Flottierung angeordnet ist, welche eine der letzten Flottierung vorangehende vorvorletzte Flottierung ist.

Diese Maßnahme ist insbesondere bei Gewebebändern mit offener und/oder einlagiger Webstruktur sinnvoll, da bei solchen Gewebebändern die Längsfadenendabschnitte oftmals nur locker im Gewebe verankert sind und die Längsfadenendabschnitte somit zumindest teilweise leicht aus dem Gewebe treten können und insbesondere über die zur Faserstoffbahn weisende und in der Regel die Bahnkontaktseite bereitstellende Oberseite oder über die zur Maschine weisende und in der Regel die Maschinenkontaktseite bereitstellende Unterseite überstehen können.

Um das oben beschriebene Heraustreten eines Fadenendes zu unterbinden kann es ferner sinnvoll sein, wenn zumindest einer der weiteren Gewebenaht-Querfäden der an der Fadenkreuzungsstelle stoffschlüssig mit dem Längsfadenendabschnitt verbunden ist, in der letzten Flottierung angeordnet ist.

Um das Gewebeband im Gewebenahtabschnitt durch die stoffschlüssige Verbindung nicht zu sehr zu versteifen, ist es insbesondere sinnvoll, wenn nicht mehr als sechs, insbesondere nicht mehr als vier, unmittelbar zueinander benachbarte Gewebenaht-Querfäden mit dem jeweiligen Längsfadenendabschnitt stoffschlüssig verbunden sind. Hierdurch wird auch erreicht, dass die Permeabilität des Gewebebands im Gewebenahtabschnitt nicht zu sehr reduziert wird.

Oftmals ist die Webstruktur eines Gewebebands dergestalt, dass beim Verweben der Längsfäden mit den Querfäden Flottierungen der Längsfäden mit unterschiedlicher Länge gebildet werden. Da sich nach einer bevorzugten Ausgestaltung der Erfindung die Webstruktur des Gewebebands im Gewebenahtbereich fortsetzt, bilden insbesondere in einem solchen Fall die Längsfadenendabschnitte im Gewebenahtabschnitt Flottierungen mit unterschiedlicher Länge. Nach einer bevorzugten Weiterbildung der Erfindung ist daher vorgesehen, dass im Webpfad der zumindest einigen Längsfadenendabschnitte Flottierungen mit unterschiedlicher Länge gebildet sind, wobei die zumindest eine Fadenkreuzungsstelle an welcher der jeweilige Längsfadenendabschnitt stoffschlüssig mit einem Gewebenaht-Querfaden verbunden ist, in einer Flottierung angeordnet ist, die eine kürzere Länge als andere Flottierungen hat. Versuche der Anmelderin haben gezeigt, dass bei längeren Flottierungen, der Längsfadenendabschnitt bogenförmiger über die Gewebenaht-Querfäden läuft als bei kürzeren Flottierungen und daher bei längeren Flottierungen oftmals ein schlechterer Kontakt an der Fadenkreuzungsstelle zwischen Gewebenaht-Querfaden und Längsfadenendabschnitt vorherrscht als bei im Vergleich dazu kürzeren Flottierungen, wodurch bei den längeren Flottierungen eine weniger haltbare stoffschlüssige Verbindung als bei den kürzeren Flottierungen erreicht wird. Durch die oben genannte Maßnahme wird somit die Haltbarkeit der stoffschlüssigen Verbindung weiter erhöht. In diesem Zusammenhang ist es insbesondere sinnvoll, wenn sich die Flottierung mit kürzerer Länge über maximal vier, insbesondere maximal zwei unmittelbar zueinander benachbarte Gewebenaht-Querfäden erstreckt. Unter der Länge einer Flottierung eines Längsfadenendabschnitts ist die Anzahl der Gewebenaht-Querfäden zu verstehen, die der Längsfadenendabschnitt aufeinander folgend auf derselben Seite der Gewebenaht-Querfäden laufend kreuzt.

Die vorgenannte Ausführungsform kann auch eine eigenständige Erfindung darstellen gemäß der ein Gewebeband unter Schutz gestellt ist, mit Längsfäden die mit diesen kreuzenden Querfäden unter Ausbildung von Fadenkreuzungsstellen verwoben sind, wobei das Gewebeband ein Oberseite und eine dieser gegenüberliegende Unterseite hat, wobei zumindest einige der Längsfäden beim Verweben mit den Querfäden einem Webpfad folgen, entlang dem der jeweilige Längsfaden mehrmals abwechselnd auf der Oberseite und Unterseite Flottierungen ausbildet, wobei zumindest einige der Flottierungen unterschiedliche Länge haben, wobei die zumindest eine Fadenkreuzungsstelle an welcher der jeweilige Längsfadenendabschnitt stoffschlüssig mit einem Gewebenaht-Querfaden verbunden ist, in einer Flottierung angeordnet ist, die kürzer als die Länge anderer Flottierungen ist.

Zur Erhöhung des Kontakts zwischen Gewebenaht-Querfäden und Längsfadenendabschnitt an der Fadenkreuzungsstelle und damit zur Verbesserung der stoffschlüssigen Verbindung ist vorgesehen, dass die zumindest einigen Längsfäden und/oder zumindest einige Gewebenaht-Querfäden eine abgeflachte Querschnittsform haben.

Gewebebänder werden durch einen Webprozess hergestellt, bei dem der Schuss- bzw. Querfaden senkrecht zu den Kett- bzw. Längsfäden hin- und her gewebt wird. Hierzu wird der Schussfaden von einer Spule abgezogen, wodurch sich der Schussfaden um seine eigene Achse verdrehen kann. Ein solches Verdrehen ist kein Problem, wenn es sich um einen Schussfaden mit kreisrunder Querschnittsform handelt. Dies kann aber zu Problemen führen, wenn die Querschnittsform von der kreisrunden Form abweicht. Eine besonders bevorzugte Ausgestaltung der Erfindung sieht daher vor, dass die zumindest einigen Längsfäden eine abgeflachte, bspw. rechteckige oder elliptische Querschnittsform und die Gewebenaht-Querfäden insbesondere eine kreisrunde Querschnittform haben. Die Verwendung von Längsfäden mit abgeflachter Querschnittsform hat aber noch weitere Vorteile. So haben abgeflachte Längsfäden gegenüber Längsfäden mit kreisrunder Querschnittsform bei gleicher Dicke eine größere Querschnittsfläche. Ferner stellen abgeflachte Längsfäden gegenüber kreisrunden Längsfäden eine größere Kontaktfläche auf der Ober- und/oder Unterseite bereit. Dies kann bspw. bei TAD-Sieben von Vorteil sein, die eine hohe Kontaktfläche zur Faserstoffbahn bereitstellen sollen.

Es sind verschiedene Möglichkeiten zur Herstellung der stoffschlüssigen Verbindung denkbar. Nach einer besonders bevorzugten Weiterbildung der Erfindung ist vorgesehen, dass die stoffschlüssige Verbindung durch Einwirkung von Strahlungsenergie einer bestimmten Wellenlänge oder eines bestimmten Wellenlängenbereichs, insbesondere durch Laserstrahlungsenergie, bewirkt ist. Eine solche Art der Herstellung einer stoffschlüssigen Verbindung hat den Vorteil, dass bei dieser sehr lokal eingewirkt werden kann, ohne das gesamte Gewebeband bspw. mit Temperatur zu beaufschlagen. Denkbar ist in diesem Zusammenhang insbesondere, dass die Wellenlänge bzw. der Wellenlängenbereich im Infraroten liegt, insbesondere im Bereich von 700nm bis 1200 nm.

Konkret ist es denkbar, dass bei zumindest einigen stoffschlüssig verbundenen Fäden vor Einwirkung der Strahlungsenergie an den Fadenkreuzungsstellen zwischen den Fäden ein Material eingebracht wurde, welches die Strahlungsenergie stärker absorbiert als das Material der Fäden. Ein solches "Absorbermaterial" kann bspw. in flüssiger Form vorliegen und zwischen die zu verbindenden Teile aufgesprüht werden. Ein solches flüssiges "Absorbermaterial" wird bspw. unter der Bezeichnung "Clearweld" der Fa. Gentex Corp. vertrieben.

Alternativ dazu ist es denkbar, dass die Längsfäden und/oder die Gewebenaht-Querfäden eine erste Fadenart und eine zweite Fadenart umfassen, wobei die erste Fadenart aus einem Material ist, welches die Strahlungsenergie stärker absorbiert als das Material der zweiten Fadenart. Konkret können somit bspw. die Fäden der ersten Art aus einem Material sein, welches Ruß und/oder Farbpigmente und/oder CNT (Carbon Nano Tubes) umfasst.

Denkbar ist in diesem Zusammenhang insbesondere, dass die Gewebenaht-Querfäden die an Fadenkreuzungsstellen stoffschlüssig mit den Längsfadenendabschnitten verbunden sind, Fäden der ersten Fadenart sind. In diesem Fall ist es insbesondere denkbar, dass die Längsfäden und die übrigen Querfäden, Fäden der zweiten Fadenart sind.

Nach einer bevorzugten Ausgestaltung der Erfindung ist vorgesehen, dass bei zumindest einigen der Längsfadenendabschnitte, insbesondere bei allen Längsfadenendabschnitten, die Flottierung, in welcher der zumindest eine mit dem Längsfadenendabschnitt an der Fadenkreuzungsstelle stoffschlüssig verbundene Gewebenaht-Querfaden angeordnet ist, auf derselben Seite von Ober- und Unterseite verläuft. Durch diese Ausgestaltung ist eine stoffschlüssige Verbindung möglich, indem die Einwirkung der Strahlungsenergie zur Herstellung der stoffschlüssigen Verbindung von einer einzigen Seite erfolgen kann. Dies erleichtert und vereinfacht die Herstellung des erfindungsgemäßen Gewebebandes deutlich, insbesondere wenn die Webpfade sämtlicher Längsfadenendabschnitt dergestalt ausgebildet sind.

Sind in diesem Zusammenhang die Längsfäden Fäden der zweiten Fadenart und die stoffschlüssig verbundenen Gewebenaht-Querfäden Fäden der ersten Fadenart, kann in diesem Fall zur Herstellung der stoffschlüssigen Verbindung die Einwirkung der Strahlungsenergie auf einer Seite von Ober- und Unterseite erfolgen, nämlich der Seite auf welcher die oben genannte Flottierung verläuft.

Alternativ ist denkbar, dass zumindest einige Längsfäden Fäden der ersten Fadenart sind.

Die erfindungsgemäße Lösung ist insbesondere für ein Gewebeband einsetzbar, welches durch nur ein System von Längsfäden und/oder durch nur ein System von Querfäden gebildet ist, da bei solchen Geweben die Fadenendabschnitte weniger durch weitere Fäden unter Zugspannung gehalten werden und da sich bei solchen Geweben die Fadenendabschnitte gegenseitig weniger durch Reibschluss halten.

Bei dem erfindungsgemäßen Gewebeband handelt es sich vorzugsweise um ein Gewebeband mit einer Permeabilität im Bereich von 765 - 1444 m³/h (entspricht 450 bis 850 cfm), insbesondere 765 - 1274 m³/h (entspricht 450 bis 750 cfm) und/oder einer Dicke im Bereich von 0,7 bis 1,1 Millimeter. Ferner ist das Gewebeband vorzugsweise ein Trockensieb, insbesondere geeignet zur Verwendung in einer Trockeneinrichtung bei der das Sieb mit heißer Luft durchströmt wird. Ein solches Trockensieb wird üblicherweise als "Through Air Dryer" - Sieb oder TAD-Sieb bezeichnet.

Nach einer konkreten Ausgestaltung der Erfindung kann vorgesehen sein, dass im Webpfad aller Längsfadenendabschnitte das jeweilige Fadenende innerhalb des Gewebes oder an der anderen Seite von Ober- und Unterseite angeordnet ist.

Nach einer möglichen konkreten Ausgestaltung der Erfindung ist das Gewebeband ein endloses Gewebeband, das gebildet ist durch einen flach gewobenen Vollgewebeabschnitt und den Gewebenahtabschnitt. Hierbei ist der Vollgewebeabschnitt durch die Längsfäden und mit diesen verwobenen als Vollgewebe-Querfäden bezeichnete Querfäden gebildet. Ferner ist der Vollgewebeabschnitt in seiner Längsausdehnung durch ein erstes und ein zweites stirnseitiges Abschnittsende begrenzt. Ferner wird der eine der beiden endständigen Längsfadenendabschnitte eines Längsfadens als erster Längsfadenendabschnitt und das andere der beiden endständigen Längsfadenendabschnitte eines Längsfadens als zweiter Längsfadenendabschnitt bezeichnet, wobei der erste Längsfadenendabschnitt in Längsrichtung des Gewebebands betrachtet über das erste stirnseitige Abschnittsende des Vollgewebeabschnitts und der zweite Längsfadenendabschnitte in Längsrichtung des Gewebebands betrachtet über das zweite stirnseitige Abschnittsende hinausragt. Bei einem solchen endlosen Gewebeband sind die beiden stirnseitigen Abschnittsenden des Vollgewebeabschnitts durch den Gewebenahtabschnitt miteinander verbunden, welcher durch Zusammenführen der ersten und zweiten Längsfadenendabschnitte und deren Verweben mit Gewebenaht-Querfäden gebildet ist. Zu bemerken ist in diesem Zusammenhang noch, dass jeder erste Längsfadenendabschnitt durch ein erstes Fadenende und jeder zweite Längsfadenendabschnitt durch ein zweites Fadenende abgeschlossen wird. Eine auf der vorherigen Ausgestaltung aufbauende Weiterbildung der Erfindung sieht insbesondere vor, dass das Gewebeband endlosgemacht ist, indem jeweils ein erster und ein zweiter Längsfadenendabschnitt paarweise unter Bildung von sog. "Treffstellen" zusammengeführt sind.

Hierbei kann es sich bei den paarweise zusammengeführten ersten und zweiten Längsfadenendabschnitten jeweils um den ersten und zweiten Längsfadenendabschnitt ein und desselben Längsfadens handeln. Denkbar ist aber auch, dass es sich bei den paarweise zusammengeführten ersten und zweiten Längsfadenendabschnitten um den ersten Längsfadenabschnitt eines ersten Längsfaden und um den zweiten Längsfadenendabschnitt eines zweiten Längsfaden handelt, der zum ersten Längsfaden um maximal 20, insbesondere maximazehn Längsfadens versetzt angeordnet ist.

Eine weitere konkrete Weiterbildung der Erfindung kann vorsehen, dass zumindest einige der paarweise zusammengeführten ersten und zweiten Längsfadenendabschnitte mit einem oder mehreren Gewebenaht-Querfäden gemeinsam verwoben sind. Sind paarweise zusammengeführte erste und zweite Längsfadenendabschnitte mit einem oder mehreren Gewebenaht-Querfäden gemeinsam verwoben, ist die Länge einer Treffstelle durch die Anzahl der Gewebenaht-Querfäden festgelegt, mit denen die zusammengeführten Längsfadenendabschnitte gemeinsam verwoben sind. Dort wo diese gemeinsam verwoben sind, haben die Webpfade der paarweise zusammengeführten Längsfadenendabschnitte insbesondere den gleichen Verlauf.

Zu bemerken ist in diesem Zusammenhang, dass das gemeinsame Verweben vorzugsweise mit maximal zehn Gewebenaht-Querfäden, bevorzugt mit maximal vier Gewebenaht-Querfäden erfolgt. Denkbar ist aber auch, dass die paarweise zusammengeführten Längsfadenendabschnitte mit keinem Gewebenaht-Querfaden gemeinsam verwoben sind.

Sind zumindest einige der paarweise zusammengeführten ersten und zweiten Längsfadenendabschnitte mit zumindest einem Gewebenaht-Querfäden gemeinsam verwoben, so ist es insbesondere denkbar, dass der zumindest eine gemeinsam verwobene Gewebenaht-Querfaden im Webpfad des ersten und im Webpfad des zweiten Längsfadenabschnitts in der letzten Flottierung angeordnet ist. Denkbar ist hierbei insbesondere, dass sich die letzte Flottierung im Webpfad des ersten Längsfadenabschnitts und die letzte Flottierung im Webpfad des zweiten Längsfadenabschnitts zumindest abschnittweise überlappen.

Die erfindungsgemäße Lösung ist zusätzlich und/oder alternativ bevorzugt bei Gewebebändern einsetzbar, die eine "relativ offene" Webstruktur haben. Demzufolge kann es sich nach einer Ausgestaltung der Erfindung um ein Gewebeband handeln, welches eine Fadendichte von maximal 24 Längsfäden pro cm (entspricht 60 Längsfäden pro inch), insbesondere 12 bis 24 Längsfäden pro cm (30 bis 60 Längsfäden pro inch), bevorzugt 16 bis 22 Längsfäden pro cm (entspricht 40 bis 55 Längsfäden pro inch) und/oder eine Fadendichte von maximal 24 Querfäden, insbesondere pro cm, (60 Querfäden pro inch), 12 bis 24 Querfäden pro cm (30 bis 60 Querfäden pro inch), bevorzugt 16 bis 22 Querfäden pro cm (entspricht 40 bis 55 Querfäden pro inch) hat. Zu bemerken ist in diesem Zusammenhang insbesondere, dass solche Gewebebänder insbesondere im Gewebenahtabschnitt die gleiche Fadendichte wie im Vollgewebeabschnitt hat.

Eine Weiterbildung der Erfindung sieht vor, dass zumindest einige der paarweise zusammengeführten ersten und zweiten Längsfadenendabschnitte mit maximal sechs unmittelbar benachbarten Gewebenaht-Querfäden gemeinsam verwoben sind, wobei die gemeinsam verwobenen Gewebenaht-Querfäden im Webpfad des ersten Längsfadenendabschnitts in der letzten und in der der letzten Flottierung unmittelbar vorangehenden vorletzten Flottierung angeordnet sind und wobei die gemeinsam verwobenen Gewebenaht-Querfäden im Webpfad des zweiten Längsfadenendabschnitts in der letzten und in der der letzten Flottierung unmittelbar vorangehenden vorletzten Flottierung angeordnet sind.

Konkret kann der Gewebenahtabschnitt in einem Webmuster mit einem Längsfaden- und einem Querfadenrapport gewebt sein, wobei der Längsfadenrapport durch gleich viel oder mehr Gewebenaht-Querfäden gebildet ist wie/als die Anzahl der Gewebenaht-Querfäden, mit denen die paarweise zusammengeführten ersten und zweiten Längsfadenendabschnitte gemeinsam verwoben sind. Durch ein solches relativ kurzes Verweben der zusammengeführten Längsfadenendabschnitte mit gemeinsamen Gewebenaht-Querfäden variieren physikalische Eigenschaften, wie bspw. Permeabilität, im Gewebenahtbereichs lokal weniger stark als wenn das gemeinsame Verweben sich über mehr Gewebenaht-Querfäden erstreckt als der Längsfadenrapport Gewebenaht-Querfäden hat. Vorzugsweise ist der Längsfadenrapport des Gewebenahtabschnitts gleich wie der des Vollgewebeabschnitts und der Querfadenrapport des Gewebenahtabschnitts gleich wie der des Vollgewebeabschnitts.

Alternativ dazu kann der Gewebenahtabschnitt in einem Webmuster mit einem Längsfaden- und einem Querfadenrapport gewebt sein, wobei der Längsfadenrapport durch weniger Gewebenaht-Querfäden gebildet ist als die Anzahl der Gewebenaht-Querfäden, mit denen die paarweise zusammengeführten ersten und zweiten Längsfadenendabschnitte gemeinsam verwoben sind.

Nach einer weiteren alternativen Ausgestaltung ist es auch denkbar, dass zumindest einige der paarweise zusammengeführten ersten und zweiten Längsfadenendabschnitte mit keinem Gewebenaht-Querfaden gemeinsam verwoben sind, wobei die letzte Flottierung im Webpfad des ersten Längsfadenendabschnitts und die letzte Flottierung im Webpfad des zweiten Längsfadenabschnitts entweder unmittelbar aneinander grenzen oder maximal zwei unmittelbar benachbarte Gewebenaht-Querfäden voneinander beabstandet sind. Unmittelbar aneinander grenzen bedeutet in diesem Zusammenhang, dass zwischen den beiden letzten Flottierungen kein Gewebenaht-Querfaden angeordnet ist.

Auch durch diese Maßnahme wird eine starke Variation der physikalischen Eigenschaften, wie bspw. der Permeabilität oder der Ebenheit der Ober- und/oder Unterseite, im Gewebenahtbereich entgegengewirkt, wobei es sich gezeigt hat, dass ein größerer Abstand in MD-Richtung der paarweise zusammengeführten ersten und zweiten Längsfadenendabschnitte als der oben beschriebene eine nachteilige Schwächung der Gewebenaht sowie oftmals einen zu großen Permeabilitätsunterschied an dieser Stelle gegenüber anderen Gewebebereichen mit sich bringt. Sind paarweise zusammengeführte erste und zweite Längsfadenendabschnitte mit keinem Gewebenaht-Querfäden gemeinsam verwoben, ist die Länge einer Treffstelle durch die Anzahl der Gewebenaht-Querfäden festgelegt, die zwischen den beiden Enden der Webpfade der beiden zusammengeführten Längsfadenendabschnitte angeordnet sind.

Um die Festigkeit der Naht zu erhöhen ist es sinnvoll, dass die Stellen, an denen die ersten und zweiten Längsfadenendabschnitte paarweise zusammengeführt sind, für verschiedene Paare von zusammengeführten ersten und zweiten Längsfadenendabschnitten in Längsrichtung des Gewebebands betrachtet, versetzt zueinander angeordnet sind. Denkbar ist in diesem Zusammenhang insbesondere, dass die Gewebenaht-Querfäden, mit denen erste Längsfadenendabschnitte stoffschlüssig verbunden sind, für verschiedene erste Längsfadenendabschnitte zumindest teilweise durch unterschiedliche Gewebenaht-Querfäden bereitgestellt sind. Ebenso ist denkbar, dass die Gewebenaht-Querfäden mit denen zweite Längsfadenendabschnitte stoffschlüssig verbunden sind, für verschiedene zweite Längsfadenendabschnitte zumindest teilweise durch unterschiedliche Gewebenaht-Querfäden bereitgestellt sind.

Konkret können die letzten Flottierungen im Webpfad jeweils unmittelbar benachbarter erster bzw. zweiter Längsfadenendabschnitte um zumindest einen Gewebenaht-Querfaden, insbesondere zumindest einen Gewebenaht-Querfaden zwischen sich frei lassend, zueinander versetzt angeordnet sein.

Denkbar ist in diesem Zusammenhang bspw., dass die letzten Flottierungen im Webpfad jeweils unmittelbar benachbarter erster Längsfadenendabschnitte um zumindest einen Längsfadenrapport zueinander versetzt angeordnet sind. Ebenso können die letzten Flottierungen im Webpfad jeweils unmittelbar benachbarter zweiter Längsfadenendabschnitte um zumindest einen Längsfadenrapport zueinander versetzt angeordnet sein.

Vorzugsweise sind in diesem Zusammenhang die Gewebenaht-Querfäden mit denen ein erstes Paar von zusammengeführten ersten und zweiten Längsfadenendabschnitten gemeinsam verwoben ist um mehrere Gewebenaht-Querfäden versetzt zu den Gewebenaht-Querfäden mit denen ein zum ersten Paar unmittelbar benachbartes Paar von zusammengeführten ersten und zweiten Längsfadenendabschnitten gemeinsam verwoben sind. Sind in diesem die stoffschlüssig zu verbindenden Gewebenaht-Querfäden Fäden erster Art, so wird hierdurch die Möglichkeit geschaffen, dass die mit dem ersten Paar eine stoffschlüssige Verbindung eingehenden Fäden erster Art beabstandet zu den mit dem zweiten Paar eine stoffschlüssige Verbindung eingehenden Fäden erster Art angeordnet sind. Hierdurch kann die Steifigkeit des Gewebebands in in Längsrichtung des Gewebebands reduziert werden, da eine stoffschlüssige Verbindung in zueinander in Längsrichtung des Gewebebands betrachtet beabstandeten streifigen Bereichen erfolgt.

Die Erfindung wird nachfolgend anhand von schematischen Zeichnungen weiter erläutert. Es zeigen die
- Figur 1: eine Photographie eines Webpfads zweier Längsfadenendabschnitte gemäß einer ersten Ausführungsform der Erfindung in Längsrichtung der Längsfäden,
- Figur 2: die Ausführungsform des erfindungsgemäßen Gewebebands der Figur 1 in abschnittweiser Darstellung des Gewebenahtbereichs in Draufsicht,
- Figur 3: eine Photographie eines Webpfads zweier Längsfadenendabschnitte gemäß einer zweiten Ausführungsform der Erfindung in Längsrichtung der Längsfäden und
- Figur 4: verschiedene Ausführungsformen von Webpfaden zweier paarweise zusammengeführter Längsfadenendabschnitte gemäß weiteren Ausführungsformen der Erfindung in Längsrichtung der Längsfäden.

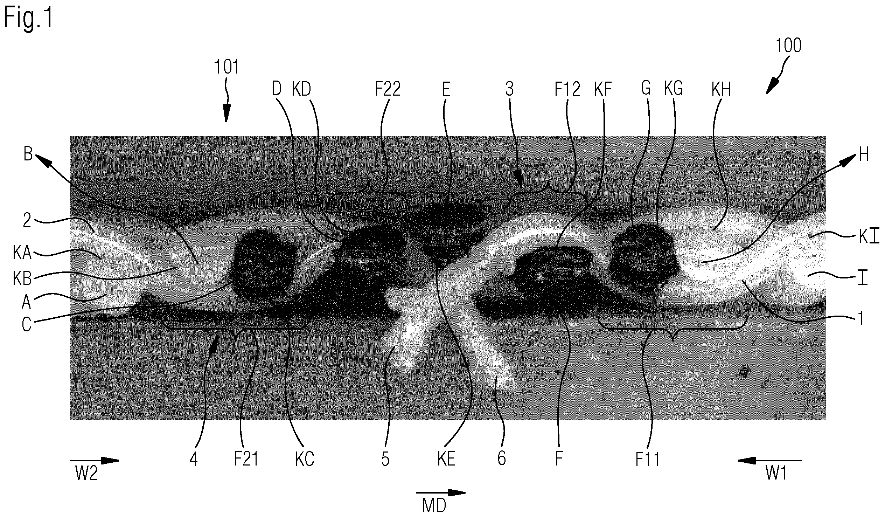

Die Figur 1 zeigt eine Photographie des Webpfads zweier paarweise zusammengeführter Längsfadenendabschnitte 1, 2 gemäß einer ersten Ausführungsform eines erfindungsgemäßen Gewebebands 100 in Längsrichtung der Längsfäden.

Das Gewebeband 100 hat Längsfäden die mit Querfäden unter Ausbildung von Fadenkreuzungsstellen KA bis KI verwoben sind, sowie eine Oberseite 3 und eine dieser gegenüberliegende Unterseite 4. Bei bestimmungsgemäßer Verwendung des Gewebebands in einer Papier-, Karton, Tissue- oder Non-Woven Maschine erstrecken sich die Längsfäden in MD-Richtung MD und die Querfäden in CD-Richtung CD der Maschine.

Das Gewebeband 100 ist hierbei nur durch ein System von Längsfäden und nur durch ein System von Querfäden gebildet.

Die Längsfäden haben in ihrer Länge betrachtet zwei endständige Längsfadenendabschnitte, nämlich einen ersten Längsfadenendabschnitt 1 und einen zweiten Längsfadenendabschnitt 2, wobei jeder Längsfadenendabschnitt 1, 2 in seiner Länge durch ein Fadenende 5, 6 begrenzt ist. Vorliegend ist der erste Längsfadenendabschnitt 1 durch das erste Fadenende 5 und der zweite Längsfadenendabschnitt durch das zweite Fadenende 6 begrenzt.

Das Gewebeband 100 ist ein endloses Gewebeband, gebildet durch einen flach gewobenen Vollgewebeabschnitt (nicht dargestellt) und einen teilweise dargestellten Gewebenahtabschnitt 101. Hierbei ist der Vollgewebeabschnitt durch die Längsfäden und mit diesen verwobenen als Vollgewebe-Querfäden bezeichnete Querfäden gebildet und der Vollgewebeabschnitt ist in seiner Längsausdehnung durch ein erstes und ein zweites stirnseitiges Abschnittsende begrenzt, wobei die ersten Längsfadenendabschnitte 1 in MD-Richtung über das erste stirnseitige Abschnittsende hinausragen und die zweiten Längsfadenendabschnitte 2 über das zweite Abschnittsende hinausragen. Hierbei sind die beiden stirnseitigen Abschnittsenden durch den Gewebenahtabschnitt miteinander verbunden. Der Gewebenaht-Abschnitt 101 ist durch Zusammenführen von ersten und zweiten Längsfadenendabschnitte und deren Verweben mit als Gewebenaht-Querfäden bezeichneten Querfäden gebildet, wobei vorliegend die beiden Längsfadenendabschnitte 1,2 sowie die Gewebenaht-Querfäden A bis I zu sehen sind.

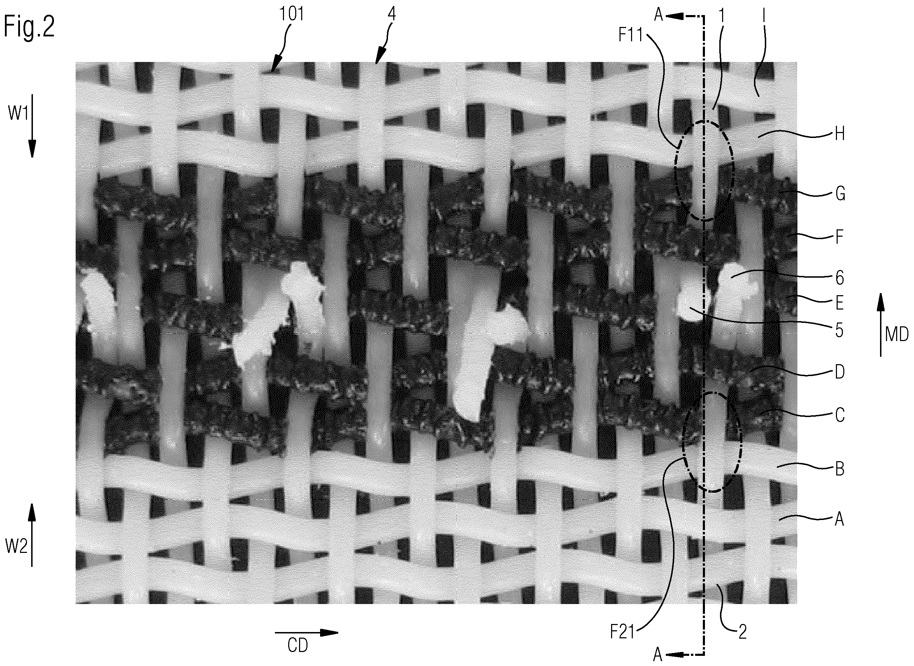

Die Figur 2 zeigt den Gewebenaht-Abschnitt 101 des erfindungsgemäßen Gewebebands 100 der Figur 1 in abschnittweiser Darstellung in Draufsicht, wobei die Webpfade der beiden Längsfadenendabschnitte der Figur 1 entlang der Schnittlinie A-A verlaufen.

Vorliegend sind die Längsfäden und damit auch die Längsfadenendabschnitte 1, 2 sowie die in der Figur 1 gezeigten Gewebenaht-Querfäden A, B, H und I Fäden zweiter Art. Die Gewebenaht- Querfäden C bis G sind Fäden erster Art, d.h. diese Fäden absorbieren Strahlungsenergie einer bestimmten Wellenlänge stärker als die Fäden zweiter Art. Vorliegend sind die Gewebenaht-Querfäden C bis G aus einer PET und CNT 8Carbon Nanotubes) enthaltenden Mischung wobei das Material der Fäden zweiter Art kein CNT enthält.

Wie aus der Darstellung der Figur 1 zu erkennen ist, folgen die beiden Längsfadenendabschnitte 1, 2 jeweils beim Verweben mit den Gewebenaht-Querfäden A bis I einem Webpfad, entlang dem der jeweilige Längsfadenendabschnitt 1, 2 in Richtung W1, W2 zu seinem Fadenende 5, 6 betrachtet mehrmals abwechselnd auf der Oberseite 3 und der Unterseite 4 Flottierungen F11, F12, F21, F22 ausbildet. Man erkennt, dass jede der Flottierungen F11 bis F22 gebildet ist, indem der Längsfadenendabschnitt 1, 2 auf derselben Seite von Oberseite 3 und Unterseite 4 laufend einen oder mehrere unmittelbar benachbarte Gewebenaht-Querfäden kreuzt. Konkret bildet der erste Längsfadenendabschnitt 1 die Flottierung F11, indem dieser auf der Unterseite 4 laufend die beiden unmittelbar benachbarten Gewebenaht-Querfäden G und H kreuzt und die Flottierung F12, indem dieser auf der Oberseite 3 laufend den Gewebenaht-Querfaden F kreuzt. Ferner bildet der zweite Längsfadenendabschnitt 2 die Flottierung F21, indem dieser auf der Unterseite 4 laufend die beiden unmittelbar benachbarten Gewebenaht-Querfäden B und C kreuzt und die Flottierung F22, indem dieser auf der Oberseite 3 laufend den Gewebenaht-Querfaden E kreuzt.

Der Webpfad des ersten Längsfadenendabschnitts 1 verläuft hierbei in der Richtung W1 zum ersten Fadenende 5, wie der Webpfad des zweiten Längsfadenendabschnitts 2 in der Richtung W2 zum zweiten Fadenende 6 verläuft. Wie zu erkennen ist, bildet der erste Längsfadenendabschnitt 1 in seinem in Richtung W1 verlaufenden Webpfad vor dem ersten Fadenende 5 die letzte Flottierung F12 aus und verläuft im Anschluss an die letzte Flottierung F12 vor dem ersten Fadenende 5 von der Oberseite 3 zur Unterseite 4. Ferner bildet der zweite Längsfadenendabschnitt 2 in seinem in Richtung W2 verlaufenden Webpfad vor dem zweiten Fadenende 6 die letzte Flottierung F22 aus und verläuft im Anschluss an die letzte Flottierung F22 vor dem zweiten Fadenende 6 von der Oberseite 3 zur Unterseite 4. Beide Längsfadenendabschnitte 1, 2 verweben nach der letzten Flottierung F12, F22 mit keinem weiteren Gewebenaht-Querfaden. Erfindungsgemäß ist der erste Längsfadenendabschnitt 1 an der Fadenkreuzungsstelle KG mit dem Gewebenaht-Querfaden G stoffschlüssig verbunden, wobei die Fadenkreuzungsstelle KG in der im Webpfad vor der letzten Flottierung F12 liegenden Flottierung F11 angeordnet ist. Vorliegend handelt es sich bei der Flottierung F11 um die Flottierung, die im Webpfad des ersten Längsfadenendabschnitts 1 der letzten Flottierung 12 unmittelbar vorangeht, nämlich um die im Webpfad des ersten Längsfadenendabschnitts 1 vorletzte Flottierung F11.

Zusätzlich dazu ist der erste Längsfadenendabschnitt 1 an den Fadenkreuzungsstellen KF und KE mit den Gewebenaht-Querfäden F und E stoffschlüssig verbunden, wobei diese Verbindungen oftmals nicht reproduzierbar gut hergestellt werden können.

Erfindungsgemäß ist ferner der zweite Längsfadenendabschnitt 2 an der Fadenkreuzungsstelle KC mit dem Gewebenaht-Querfaden C stoffschlüssig verbunden, wobei die Fadenkreuzungsstelle KC in der im Webpfad vor der letzten Flottierung F22 liegenden Flottierung F21 angeordnet ist. Vorliegend handelt es sich bei der Flottierung F21 um die Flottierung, die im Webpfad des zweiten Längsfadenendabschnitts 2 der letzten Flottierung 22 unmittelbar vorangeht, nämlich um die im Webpfad des zweiten Längsfadenendabschnitts 2 vorletzte Flottierung 21.

Zusätzlich dazu ist der zweite Längsfadenendabschnitt 2 an den Fadenkreuzungsstellen KD und KE mit den Gewebenaht-Querfäden D und E stoffschlüssig verbunden, wobei diese Verbindungen oftmals nicht reproduzierbar gut hergestellt werden können.

Dies bedeutet, dass im Webpfad der beiden Längsfadenendabschnitte 1, 2 der jeweilige Längsfadenendabschnitt 1, 2 mit weiteren Gewebenaht-Querfäden F, E bzw. D, E an Fadenkreuzungsstellen KF, KE, KD stoffschlüssig verbunden ist.

Vorliegend ist die stoffschlüssige Verbindung an den Fadenkreuzungsstellen KC bis KG eine Schweißverbindung, hergestellt durch Einwirkung von Infrarot-Strahlungsenergie aus dem Wellenlängenbereich 700 bis 1200nm.

Wie aus der Darstellung der Figur 1 zu erkennen ist, sind die beiden paarweise zusammengeführten ersten und zweiten Längsfadenendabschnitte 1, 2 mit keinem Gewebenaht-Querfaden A bis I gemeinsamen verwoben, wobei vorliegend die letzte Flottierung F12 im Webpfad des ersten Längsfadenendabschnitts 1 und die letzte Flottierung F22 im Webpfad des zweiten Längsfadenabschnitts 2 um den Gewebenaht-Querfaden E zueinander beabstandet sind.

Im vorliegenden Ausführungsbeispiel haben sowohl die Längsfäden wie auch die Gewebenaht-Querfäden eine kreisrunde Querschnittsform.

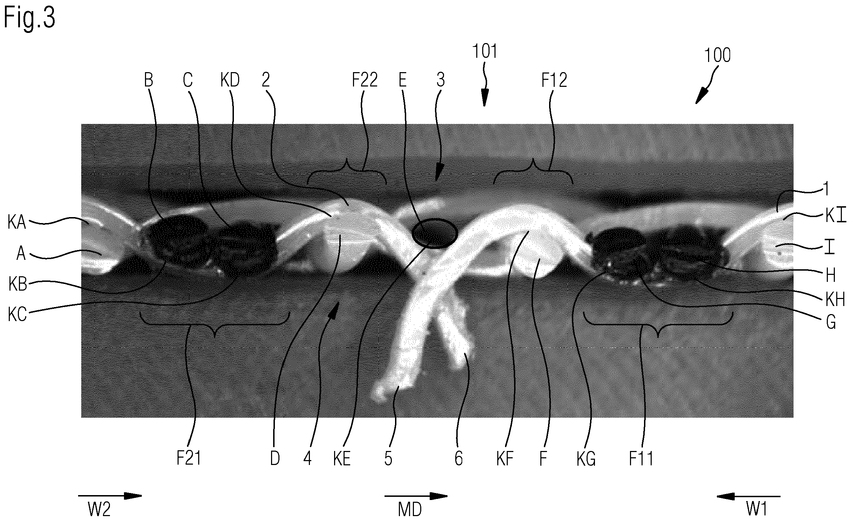

Die Figur 3 zeigt eine Photographie des Webpfads zweier paarweise zusammengeführter Längsfadenendabschnitte 1, 2 gemäß einer zweiten Ausführungsform eines erfindungsgemäßen Gewebebands 100 in Längsrichtung der Längsfäden.

Im Folgenden soll nur auf die Unterschiede zu der in den Figuren 1 und 2 gezeigten ersten Ausführungsform eingegangen werden.

Bei der Ausführungsform der Figur 3 sind die Gewebenaht-Querfäden G und H Fäden der ersten Art sodass im Webpfad des ersten Längsfadenendabschnitts 1 beide Gewebenaht-Querfäden der vorletzten Flottierung F11 Fäden erster Art sind und an den Fadenkreuzungsstellen KG und KH stoffschlüssig mit dem ersten Längsfadenendabschnitt 1 verbunden sind. Ferner ist der einzige Gewebenaht-Querfaden F der letzten Flottierung F12 im Webpfad des ersten Längsfadenendabschnitts 1 ein Faden der zweiten Art.

Des Weiteren sind die Gewebenaht-Querfäden B und C Fäden der ersten Art sodass im Webpfad des zweiten Längsfadenendabschnitts 2 beide Gewebenaht-Querfäden der vorletzten Flottierung F21 Fäden erster Art sind und an den Fadenkreuzungsstellen KB und KC stoffschlüssig mit dem zweiten Längsfadenendabschnitt 2 verbunden sind. Ferner ist der einzige Gewebenaht-Querfaden D der letzten Flottierung F22 im Webpfad des zweiten Längsfadenendabschnitts 2 ein Faden der zweiten Art.

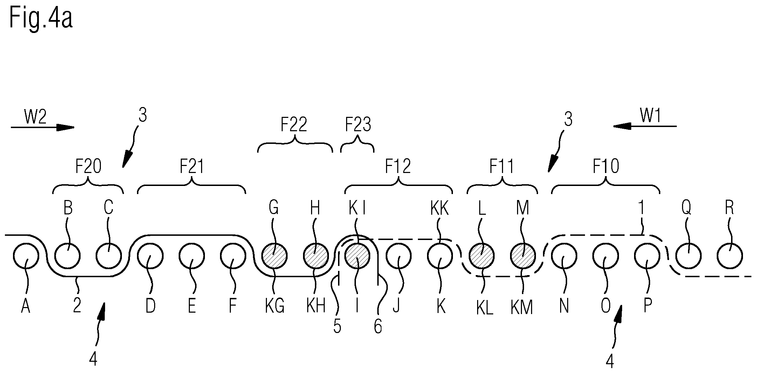

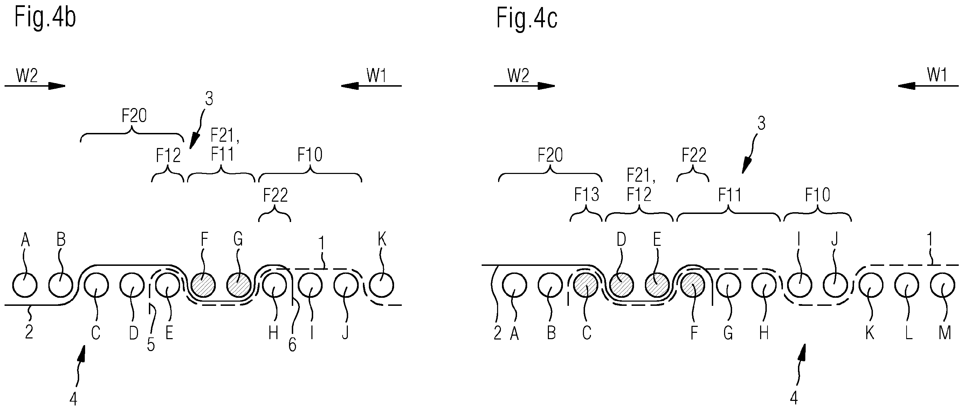

Die Figur 4 zeigt verschiedene Ausführungsformen von Webpfaden zweier paarweise zusammengeführter Längsfadenendabschnitte gemäß weiteren Ausführungsformen von erfindungsgemäßen Gewebebändern. Die Darstellung der Figur 4 zeigt die Webpfade in Längsrichtung der Längsfäden.

Bei allen Ausführungsformen der Figur 4 hat das Gewebeband eine Oberseite 3 und eine dieser gegenüberliegende Unterseite 4.

Die Figur 4a zeigt eine Ausführungsform der Webpfade zweier paarweise zusammengeführter Längsfadenendabschnitte 1, 2 beim Verweben mit Gewebenaht-Querfäden A bis R in einem Teil eines Gewebenahtabschnitts. Man erkennt, dass im Webpfad beider Längsfadenendabschnitte Flottierungen F10, F11, F12, F20, F21, F22, F23 mit unterschiedlicher Länge gebildet sind. Man erkennt ferner, dass die Gewebenaht-Querfäden A bis F, J, K und N bis R sowie die beiden Längsfadenendabschnitte 1, 2 Fäden zweiter Art und die Gewebenaht-Querfäden G, H, I und L, M Fäden erster Art sind. Der Webpfad des ersten Längsfadenendabschnitts 1 verläuft hierbei in Richtung zu seinem als erstes Fadenende 5 bezeichneten Fadenende in Richtung W1, wie der Webpfad des zweiten Längsfadenendabschnitts 2 zu seinem als zweites Fadenende 6 bezeichneten Fadenende in Richtung W2 verläuft.

Der Webpfad des ersten Längsfadenendabschnitts 1 hat eine auf der Unterseite 4 laufende Flottierung F11 mit der Flottierungslänge 2 sowie auf der Oberseite 3 laufende Flottierungen F10, F12 mit der Flottierungslänge drei, wobei die Flottierung F11 im Webpfad des ersten Längsfadenendabschnitts 1 vor dem ersten Fadenende 5, die vorletzte Flottierung ist und die Flottierung F12 die letzte Flottierung bereitstellt. Im Webpfad des ersten Längsfadenendabschnitts 1 ist erfindungsgemäß in zumindest einer vor der letzten Flottierung F12 liegenden Flottierung F11 der Längsfadenendabschnitt 1 an der Fadenkreuzungsstelle KL, KM mit zumindest einem Gewebenaht-Querfaden L, M stoffschlüssig verbunden. Konkret ist der erste Längsfadenendabschnitt 1 mit den beiden in der vorletzten Flottierung F11 liegenden Gewebenaht-Querfäden L und M an den Fadenkreuzungsstellen KL, KM stoffschlüssig verbunden. Zusätzlich ist der erste Längsfadenendabschnitt 1 in der letzten Flottierung F12 an der Fadenkreuzungsstelle KI stoffschlüssig mit dem Gewebenaht-Querfaden I verbunden. Weiter erkennt man, dass die Gewebenaht-Querfäden L, M, mit denen der erste Längsfadenendabschnitt 1 an den Fadenkreuzungsstellen KL, KM stoffschlüssig verbunden ist, in einer Flottierung F11 angeordnet sind, die gegenüber den anderen Flottierungen F12, F10 eine kürzere Länge hat.

Betrachtet man den Webpfad des zweiten Längsfadenendabschnitts 2, so erkennt man, dass dieser auf der Unterseite 4 laufende Flottierungen F20 und F22 mit der Flottierungslänge 2, eine auf der Oberseite 3 laufende Flottierung F21 mit der Flottierungslänge drei sowie eine auf der Oberseite 3 laufende Flottierung F23 mit der Flottierungslänge eins hat, wobei die Flottierung F22 im Webpfad des zweiten Längsfadenendabschnitts 2 vor dem zweiten Fadenende 6, die vorletzte Flottierung ist und die Flottierung F23 die letzte Flottierung bereitstellt.

Im Webpfad des zweiten Längsfadenendabschnitts 2 ist erfindungsgemäß in zumindest einer vor der letzten Flottierung F23 liegenden Flottierung F22 der zweite Längsfadenendabschnitt 2 an der Fadenkreuzungsstelle KG, KH mit zumindest einem Gewebenaht-Querfaden G, H stoffschlüssig verbunden. Konkret ist der zweite Längsfadenendabschnitt 2 mit den beiden in der vorletzten Flottierung F22 liegenden Gewebenaht-Querfäden G und H an den Fadenkreuzungsstellen KG, KH stoffschlüssig verbunden. Zusätzlich ist der zweite Längsfadenendabschnitt 2 in der letzten Flottierung F23 an der Fadenkreuzungsstelle KI stoffschlüssig mit dem Gewebenaht-Querfaden I verbunden. Weiter erkennt man, dass die Gewebenaht-Querfäden G, H mit denen der zweite Längsfadenendabschnitt 2 an den Fadenkreuzungsstellen KG, KH stoffschlüssig verbunden ist, in einer Flottierung F22 angeordnet sind, die gegenüber der Flottierung F21 eine kürzere Länge hat.

Des Weiteren sind die paarweise zusammengeführten ersten und zweiten Längsfadenendabschnitte 1, 2 mit dem Gewebenaht-Querfäden I gemeinsam verwoben, wobei der gemeinsam verwobene Gewebenaht-Querfaden I im Webpfad beider Längsfadenabschnitte 1, 2 in der letzten Flottierung F12 (für den ersten Längsfadenendabschnitt 1) und F23 (für den zweiten Längsfadenendabschnitt 2) angeordnet sind. Die Webpfade der beiden Längsfadenendabschnitte 1, 2 haben beim gemeinsamen Verweben mit den Gewebenaht-Querfaden I den gleichen Verlauf.

Die Figur 4b zeigt eine weitere Ausführungsform der Webpfade zweier paarweise zusammengeführter Längsfadenendabschnitte 1, 2 beim Verweben mit Gewebenaht-Querfäden A bis K in einem Teil eines Gewebenahtabschnitts. Man erkennt, dass im Webpfad beider Längsfadenendabschnitte Flottierungen F10, F11, F12, F20, F21, F22 mit unterschiedlicher Länge gebildet sind. Man erkennt ferner, dass die Gewebenaht-Querfäden A bis E und H bis K sowie die beiden Längsfadenendabschnitte 1, 2 Fäden zweiter Art und die Gewebenaht-Querfäden F und G Fäden erster Art sind. Der Webpfad des ersten Längsfadenendabschnitts 1 verläuft hierbei in Richtung zu seinem als erstes Fadenende 5 bezeichneten Fadenende in Richtung W1, wie der Webpfad des zweiten Längsfadenendabschnitts 2 zu seinem als zweites Fadenende 6 bezeichneten Fadenende in Richtung W2 verläuft.

Der Webpfad des ersten Längsfadenendabschnitts 1 hat eine auf der Unterseite 4 laufende Flottierung F11 mit der Flottierungslänge 2, eine auf der Oberseite 3 laufende Flottierung F10 mit der Flottierungslänge drei sowie eine auf der Oberseite 3 laufende Flottierung F12 mit der Flottierungslänge eins, wobei die Flottierung F11 im Webpfad des ersten Längsfadenendabschnitts 1 vor dem ersten Fadenende 5 die vorletzte Flottierung ist und die Flottierung F12 die letzte Flottierung bereitstellt.

Im Webpfad des ersten Längsfadenendabschnitts 1 ist erfindungsgemäß in zumindest einer vor der letzten Flottierung F12 liegenden Flottierung F11 der Längsfadenendabschnitt 1 an zumindest einer Fadenkreuzungsstelle KF, KG mit zumindest einem Gewebenaht-Querfaden F, G stoffschlüssig verbunden. Konkret ist der erste Längsfadenendabschnitt 1 mit den beiden in der vorletzten Flottierung F11 liegenden Gewebenaht-Querfäden F und G an den Fadenkreuzungsstellen KF, KG stoffschlüssig verbunden. Weiter erkennt man, dass die Gewebenaht-Querfäden F, G mit denen der erste Längsfadenendabschnitt 1 an den Fadenkreuzungsstellen KF, KG stoffschlüssig verbunden ist, in einer Flottierung F11 angeordnet sind, die -mit Ausnahme der letzten Flottierung F12- gegenüber den anderen Flottierungen F10 eine kürzere Länge hat.

Betrachtet man den Webpfad des zweiten Längsfadenendabschnitts 2, so hat dieser eine auf der Unterseite 4 laufende Flottierung F21 mit der Flottierungslänge 2, eine auf der Oberseite 3 laufende Flottierung F20 mit der Flottierungslänge drei sowie eine auf der Oberseite 3 laufende Flottierung F22 mit der Flottierungslänge eins, wobei die Flottierung F21 im Webpfad des zweiten Längsfadenendabschnitts 2 vor dem zweiten Fadenende 6, die vorletzte Flottierung ist und die Flottierung F22 die letzte Flottierung bereitstellt.

Im Webpfad des zweiten Längsfadenendabschnitts 2 ist erfindungsgemäß in zumindest einer vor der letzten Flottierung F22 liegenden Flottierung F21 der zweite Längsfadenendabschnitt 2 an zumindest einer Fadenkreuzungsstelle KF, KG mit zumindest einem Gewebenaht-Querfaden F, G stoffschlüssig verbunden. Konkret ist der zweite Längsfadenendabschnitt 2 mit den beiden in der vorletzten Flottierung F21 liegenden Gewebenaht-Querfäden F und G an den Fadenkreuzungsstellen KF, KG stoffschlüssig verbunden. Weiter erkennt man, dass die Gewebenaht-Querfäden F, G mit denen der zweite Längsfadenendabschnitt 2 an den Fadenkreuzungsstellen KF, KG stoffschlüssig verbunden ist, in einer Flottierung F21 angeordnet sind, die gegenüber der Flottierung F20 eine kürzere Länge hat.

Des Weiteren sind die paarweise zusammengeführten ersten und zweiten Längsfadenendabschnitte 1, 2 mit den Gewebenaht-Querfäden E bis H gemeinsam verwoben, wobei die gemeinsam verwobenen Gewebenaht-Querfäden F, G im Webpfad beider Längsfadenabschnitte 1, 2 in der vorletzten Flottierung F11 (für den ersten Längsfadenendabschnitt 1) und F21 (für den zweiten Längsfadenendabschnitt 2) angeordnet sind und der Gewebenaht-Querfaden E im Webpfad des ersten Längsfadenendabschnitts 1 in der letzten Flottierung F12 bzw. der Gewebenaht-Querfaden H im Webpfad des zweiten Längsfadenendabschnitts 2 in der letzten Flottierung F22. Die Webpfade der beiden Längsfadenendabschnitte 1, 2 haben beim gemeinsamen Verweben mit den Gewebenaht-Querfäden E bis H den gleichen Verlauf.

Die Figur 4c zeigt noch eine weitere Ausführungsform der Webpfade zweier paarweise zusammengeführter Längsfadenendabschnitte 1, 2 beim Verweben mit Gewebenaht-Querfäden A bis M in einem Teil eines Gewebenahtabschnitts. Man erkennt, dass im Webpfad beider Längsfadenendabschnitte Flottierungen F10, F11, F12, F13, F20, F21, F22 mit unterschiedlicher Länge gebildet sind. Man erkennt ferner, dass die Gewebenaht-Querfäden A, B und G bis M sowie die beiden Längsfadenendabschnitte 1, 2 Fäden zweiter Art und die Gewebenaht-Querfäden C bis F Fäden erster Art sind. Der Webpfad des ersten Längsfadenendabschnitts 1 verläuft hierbei in Richtung zu seinem als erstes Fadenende 5 bezeichneten Fadenende in Richtung W1, wie der Webpfad des zweiten Längsfadenendabschnitts 2 zu seinem als zweites Fadenende 6 bezeichneten Fadenende in Richtung W2 verläuft.

Der Webpfad des ersten Längsfadenendabschnitts 1 hat auf der Unterseite 4 laufende Flottierungen F10, F12 mit der Flottierungslänge 2, eine auf der Oberseite 3 laufende Flottierung F11 mit der Flottierungslänge drei sowie eine auf der Oberseite 3 laufende Flottierung F13 mit der Flottierungslänge eins, wobei die Flottierung F12 im Webpfad des ersten Längsfadenendabschnitts 1 vor dem ersten Fadenende 5 die vorletzte Flottierung ist und die Flottierung F13 die letzte Flottierung bereitstellt.

Im Webpfad des ersten Längsfadenendabschnitts 1 ist erfindungsgemäß in zumindest einer vor der letzten Flottierung F13 liegenden Flottierung F12 der Längsfadenendabschnitt 1 an zumindest einer Fadenkreuzungsstelle KD, KE mit zumindest einem Gewebenaht-Querfaden D, E stoffschlüssig verbunden. Konkret ist der erste Längsfadenendabschnitt 1 mit den beiden in der vorletzten Flottierung F12 liegenden Gewebenaht-Querfäden D und E an den Fadenkreuzungsstellen KD, KE stoffschlüssig verbunden. Weiter erkennt man, dass die Gewebenaht-Querfäden D, E mit denen der erste Längsfadenendabschnitt 1 an den Fadenkreuzungsstellen KD, KE stoffschlüssig verbunden ist, in einer Flottierung F12 angeordnet sind, die -mit Ausnahme der letzten Flottierung F13- gegenüber den anderen Flottierungen F11 eine kürzere Länge hat.

Betrachtet man den Webpfad des zweiten Längsfadenendabschnitts 2, so hat dieser eine auf der Unterseite 4 laufende Flottierung F21 mit der Flottierungslänge 2, eine auf der Oberseite 3 laufende Flottierung F20 mit der Flottierungslänge drei sowie eine auf der Oberseite 3 laufende Flottierung F22 mit der Flottierungslänge eins, wobei die Flottierung F21 im Webpfad des zweiten Längsfadenendabschnitts 2 vor dem zweiten Fadenende 6 die vorletzte Flottierung ist und die Flottierung F22 die letzte Flottierung bereitstellt.

Im Webpfad des zweiten Längsfadenendabschnitts 2 ist erfindungsgemäß in zumindest einer vor der letzten Flottierung F22 liegenden Flottierung F21 der zweite Längsfadenendabschnitt 2 an zumindest einer Fadenkreuzungsstelle KD, KE mit zumindest einem Gewebenaht-Querfaden D, E stoffschlüssig verbunden. Konkret ist der zweite Längsfadenendabschnitt 2 mit den beiden in der vorletzten Flottierung F21 liegenden Gewebenaht-Querfäden D und E an den Fadenkreuzungsstellen KD, KE stoffschlüssig verbunden. Weiter erkennt man, dass die Gewebenaht-Querfäden D, E mit denen der zweite Längsfadenendabschnitt 2 an den Fadenkreuzungsstellen KD, KE stoffschlüssig verbunden ist, in einer Flottierung F21 angeordnet sind, die gegenüber der Flottierung F20 eine kürzere Länge hat.

Des Weiteren sind die paarweise zusammengeführten ersten und zweiten Längsfadenendabschnitte 1, 2 mit den Gewebenaht-Querfäden C bis F gemeinsam verwoben, wobei die gemeinsam verwobenen Gewebenaht-Querfäden D, E im Webpfad beider Längsfadenabschnitte 1, 2 in der vorletzten Flottierung F12 (für den ersten Längsfadenendabschnitt 1) und F21 (für den zweiten Längsfadenendabschnitt 2) angeordnet sind und der Gewebenaht-Querfaden C im Webpfad des ersten Längsfadenendabschnitts 1 in der letzten Flottierung F13 bzw. der Gewebenaht-Querfaden F im Webpfad des zweiten Längsfadenendabschnitts 2 in der letzten Flottierung F22. Die Webpfade der beiden Längsfadenendabschnitte 1, 2 haben beim gemeinsamen Verweben mit den Gewebenaht-Querfäden C bis F den gleichen Verlauf.

## Patentansprüche

1. Gewebeband (100) für eine eine Faserstoffbahn herstellende und/oder verarbeitende Maschine, mit Längsfäden die mit Querfäden (A-M) unter Ausbildung von Fadenkreuzungsstellen (KA-KI) verwoben sind und mit einer Oberseite (3) und einer dieser gegenüberliegenden Unterseite (4) sowie einem Gewebenahtabschnitt (101), wobei jeder Längsfäden in seiner Länge betrachtet zwei endständige Längsfadenendabschnitte (1, 2) mit jeweiligem Fadenende (5, 6) hat, wobei der Gewebenahtabschnitt (101) durch Verweben der Längsfadenendabschnitte (1, 2) mit als Gewebenaht-Querfäden (A-M) bezeichneten Querfäden (A-M) gebildet ist, wobei zumindest einige der Längsfadenendabschnitte (1, 2) beim Verweben mit den Gewebenaht-Querfäden (A-M) einem Webpfad folgen, entlang dem der jeweilige Längsfadenendabschnitt (1, 2) in Richtung zu seinem Fadenende (5, 6) betrachtet mehrmals abwechselnd Flottierungen (F10, F11, F12, F13, F20, F21, F22, F23) auf der Oberseite (3) und auf der Unterseite (4) ausbildet und zwischen zwei unmittelbar benachbarten Flottierungen (F10, F11, F12, F13, F20, F21, F22, F23) auf der Oberseite (3) eine Flottierung (F10, F11, F12, F13, F20, F21, F22, F23) auf der Unterseite (4) und umgekehrt angeordnet ist, wobei im Webpfad eine vor dem Fadenende (5, 6) letzten Flottierung (F10, F11, F12, F13, F20, F21, F22, F23) auf einer Seite von Ober- und Unterseite (3, 4) gebildet ist und der Längsfadenendabschnitt (1, 2) im Anschluss an die letzte Flottierung (F10, F11, F12, F13, F20, F21, F22, F23) vor dem Fadenende (5, 6) von der einen Seite von Ober- und Unterseite (3, 4) zur anderen Seite von Ober- und Unterseite (3, 4) wechselt, und der Längsfadenendabschnitt (1, 2) an zumindest einer Fadenkreuzungsstelle (KA-KI) mit einem Gewebenaht-Querfaden (A-M) stoffschlüssig durch Einwirkung von Strahlungsenergie verbunden ist, und die zumindest eine Fadenkreuzungsstelle (KA-KI), an welcher der Längsfadenendabschnitt (1, 2) stoffschlüssig mit einem Gewebenaht-Querfaden (A-M) verbunden ist, in zumindest einer im Webpfad vor der letzten Flottierung (F10, F11, F12, F13, F20, F21, F22, F23) liegenden Flottierung (F10, F11, F12, F13, F20, F21, F22, F23) angeordnet ist, **dadurch gekennzeichnet, dass** zumindest einige Längsfäden und/oder zumindest einige Gewebenaht-Querfäden eine abgeflachte Querschnittsform haben.

2. Gewebeband (100) nach Anspruch 1, **dadurch gekennzeichnet, dass** im Webpfad der zumindest einigen Längsfadenendabschnitte (1, 2) die zumindest eine Fadenkreuzungsstelle (KA-KI) an welcher der jeweilige Längsfadenendabschnitt (1, 2) stoffschlüssig mit einem Gewebenaht-Querfaden (A-M) verbunden ist, in zumindest einer der Flottierungen (F10, F11, F12, F13, F20, F21, F22, F23) angeordnet ist, welche eine der sechs, insbesondere vier, der letzten Flottierung (F10, F11, F12, F13, F20, F21, F22, F23) unmittelbar vorangehen Flottierungen (F10, F11, F12, F13, F20, F21, F22, F23) ist.

3. Gewebeband (100) nach einem der vorangehenden Ansprüche, **dadurch gekennzeichnet, dass** im Webpfad der zumindest einigen Längsfadenendabschnitte (1, 2) die zumindest eine Fadenkreuzungsstelle (KA-KI), an welcher der jeweilige Längsfadenendabschnitt (1, 2) stoffschlüssig mit einem Gewebenaht-Querfaden (A-M) verbunden ist, in einer Flottierung (F10, F11, F12, F13, F20, F21, F22, F23) angeordnet ist, welche eine der letzten Flottierung (F10, F11, F12, F13, F20, F21, F22, F23) unmittelbar vorangehende vorletzte Flottierung (F10, F11, F12, F13, F20, F21, F22, F23) ist.

4. Gewebeband (100) nach einem der vorangehenden Ansprüche, **dadurch gekennzeichnet, dass** im Webpfad der zumindest einigen Längsfadenendabschnitte (1, 2) Flottierungen (F10, F11, F12, F13, F20, F21, F22, F23) mit unterschiedlicher Länge gebildet sind, wobei die zumindest eine Fadenkreuzungsstelle (KA-KI) an welcher der jeweilige Längsfadenendabschnitt (1, 2) stoffschlüssig mit einem Gewebenaht-Querfaden (A-M) verbunden ist, in einer Flottierung (F10, F11, F12, F13, F20, F21, F22, F23) angeordnet ist, die eine kürzere Länge als andere Flottierungen (F10, F11, F12, F13, F20, F21, F22, F23) hat.

5. Gewebeband (100) nach einem der vorangehenden Ansprüche, **dadurch gekennzeichnet, dass** zumindest einer der weiteren Gewebenaht-Querfäden (A-M), der an der Fadenkreuzungsstelle (KA-KI) stoffschlüssig mit dem Längsfadenendabschnitt (1, 2) verbunden ist, in der letzten Flottierung (F10, F11, F12, F13, F20, F21, F22, F23) angeordnet ist.

6. Gewebeband (100) nach einem der vorangehenden Ansprüche, **dadurch gekennzeichnet, dass** die stoffschlüssige Verbindung durch Einwirkung von Laserstrahlungsenergie bewirkt ist.

7. Gewebeband (100) nach einem der vorangehenden Ansprüche, **dadurch gekennzeichnet, dass** die Längsfäden und/oder die Gewebenaht-Querfäden (A-M) eine erste Fadenart und eine zweite Fadenart umfasst, wobei die erste Fadenart aus einem Material ist, welches die Strahlungsenergie stärker absorbiert als das Material der zweiten Fadenart.

8. Gewebeband (100) nach Anspruch 7, **dadurch gekennzeichnet, dass** die Gewebenaht-Querfäden (A-M), die an Fadenkreuzungsstellen (KA-KI) stoffschlüssig mit den Längsfadenendabschnitten (1, 2) verbunden sind, Fäden der ersten Fadenart sind, und insbesondere dass die Längsfäden und die übrigen Querfäden Fäden der zweiten Fadenart sind.

9. Gewebeband (100) nach einem der vorangehenden Ansprüche, **dadurch gekennzeichnet, dass** das Gewebeband (100) durch nur ein System von Längsfäden und/oder durch nur ein System von Querfäden (A-M) gebildet ist.

10. Gewebeband (100) nach einem der vorangehenden Ansprüche, **dadurch gekennzeichnet, dass** das Gewebeband (100) ein endloses Gewebeband (100) ist, gebildet durch einen flach gewobenen Vollgewebeabschnitt und den Gewebenahtabschnitt (101), wobei der Vollgewebeabschnitt durch die Längsfäden und mit diesen verwobenen als Vollgewebe-Querfäden bezeichnete Querfäden (A-M) gebildet ist, und der Vollgewebeabschnitt in seiner Längsausdehnung durch ein erstes und ein zweites stirnseitiges Abschnittsende begrenzt ist, wobei zumindest einige der Längsfäden durch die Längsfadenendabschnitte (1, 2) bereitgestellte in MD-Richtung über das erste stirnseitige Abschnittsende hinausragende erste Längsfadenendabschnitte (1, 2) mit einem ersten Fadenende (5, 6) und/oder über das zweite stirnseitige Abschnittsende hinausragende zweite Längsfadenendabschnitte (1, 2) mit einem zweiten Fadenende (5, 6) bereitstellen, und die beiden stirnseitigen Abschnittsenden durch den Gewebenahtabschnitt (101) miteinander verbunden sind, welcher durch Zusammenführen der ersten und zweiten Längsfadenendabschnitte (1, 2) und deren Verweben mit Gewebenaht-Querfäden (A-M) gebildet ist.

11. Gewebeband (100) nach Anspruch 10, **dadurch gekennzeichnet, dass** das Gewebeband (100) endlosgemacht ist, indem jeweils erste und zweite Längsfadenendabschnitte (1, 2) unter Ausbildung von Treffstellen paarweise zusammengeführt sind.

12. Gewebeband (100) nach Anspruch 10 oder 11, **dadurch gekennzeichnet, dass** zumindest einige der paarweise zusammengeführten ersten und zweiten Längsfadenendabschnitte (1, 2) mit einem oder mehreren Gewebenaht-Querfäden (A-M) gemeinsam verwoben sind.

13. Gewebeband (100) nach Anspruch 12, **dadurch gekennzeichnet, dass** zumindest einige der paarweise zusammengeführten ersten und zweiten Längsfadenendabschnitte (1, 2) mit zumindest einem Gewebenaht-Querfäden (A-M) gemeinsam verwoben sind, wobei der zumindest eine gemeinsam verwobene Gewebenaht-Querfaden (A-M) im Webpfad des ersten und im Webpfad des zweiten Längsfadenendabschnitts (1, 2) in der letzten Flottierung (F10, F11, F12, F13, F20, F21, F22, F23) angeordnet ist.

14. Gewebeband (100) nach einem der vorangehenden Ansprüche 12 und 13, **dadurch gekennzeichnet, dass** zumindest einige der paarweise zusammengeführten ersten und zweiten Längsfadenendabschnitte (1, 2) mit maximal sechs unmittelbar benachbarten Gewebenaht-Querfäden (A-M) gemeinsam verwoben sind, wobei die gemeinsam verwobenen Gewebenaht-Querfäden (A-M) im Webpfad des ersten Längsfadenendabschnitts (1, 2) in der letzten und in der der letzten Flottierung (F10, F11, F12, F13, F20, F21, F22, F23) unmittelbar vorangehenden Flottierung (F10, F11, F12, F13, F20, F21, F22, F23) angeordnet sind, und wobei die gemeinsam verwobenen Gewebenaht-Querfäden (A-M) im Webpfad des zweiten Längsfadenendabschnitts (1, 2) in der letzten und in der der letzten Flottierung (F10, F11, F12, F13, F20, F21, F22, F23) unmittelbar vorangehenden Flottierung (F10, F11, F12, F13, F20, F21, F22, F23) angeordnet sind.

15. Gewebeband (100) nach einem der vorangehenden Ansprüche, **dadurch gekennzeichnet, dass** die Gewebenaht-Querfäden (A-M) mit denen erste Längsfadenendabschnitte (1, 2) stoffschlüssig verbunden sind, für verschiedene erste Längsfadenendabschnitte (1, 2) durch unterschiedliche Gewebenaht-Querfäden (A-M) bereitgestellt sind und/oder dass die Gewebenaht-Querfäden (A-M) mit denen zweite Längsfadenendabschnitte (1, 2) stoffschlüssig verbunden sind, für verschiedene zweite Längsfadenendabschnitte (1, 2) durch unterschiedliche Gewebenaht-Querfäden (A-M) bereitgestellt sind.

## Claims

1. Woven-fabric belt (100) for a machine producing and/or processing a fibrous web, having longitudinal threads which while configuring thread intersection points (KA-KI) are interwoven with cross threads (A-M), and having an upper side (3) and a lower side (4) opposite thereto, and a woven-fabric seam portion (101), wherein each longitudinal thread when viewed in the length thereof has two end-side longitudinal thread end portions (1, 2) having a respective thread end (5, 6), wherein the woven-fabric seam portion (101) is formed by interweaving the longitudinal thread end portions (1, 2) with cross threads (A-M) which are referred to as woven-fabric seam cross threads (A-M), wherein at least some of the longitudinal thread end portions (1, 2) upon interweaving with the woven-fabric cross threads (A-M) follow a weaving path along which the respective longitudinal thread end portion (1, 2) when viewed in the direction toward the thread end (5, 6) thereof repeatedly and alternatingly configures floats (F10, F11, F12, F13, F20, F21, F22, F23) on the upper side (3) and on the lower side (4), one float (F10, F11, F12, F13, F20, F21, F22, F23) on the lower side (4) being disposed between two directly adjacent floats (F10, F11, F12, F13, F20, F21, F22, F23) on the upper side (3) and vice-versa, wherein in the weaving path a last float (F10, F11, F12, F13, F20, F21, F22, F23) before the thread end (5, 6) is formed on one of the upper and lower side (3, 4) and the longitudinal thread end portion (1, 2), subsequent to the last float (F10, F11, F12, F13, F20, F21, F22, F23) before the thread end (5, 6), changes from the one of the upper and lower side (3, 4) to the other of the upper and lower side (3, 4), and the longitudinal thread end portion (1, 2) at least at one thread intersection point (KA-KI) is connected in a materially integral manner to a woven-fabric seam cross thread (A-M) by means of the influence of radiation energy, and the at least one thread intersection point (KA-KI) at which the longitudinal thread end (1, 2) portion is connected in a materially integral manner to a woven-fabric seam cross thread (A-M) is disposed in at least one float (F10, F11, F12, F13, F20, F21, F22, F23) which in the weaving path lies before the last float (F10, F11, F12, F13, F20, F21, F22, F23), **characterized in that** at least some longitudinal threads and/or at least some woven-fabric seam cross threads have a flattened cross-sectional shape.

2. Woven-fabric belt (100) according to Claim 1, **characterized in that** in the weaving path of the at least some longitudinal thread end portions (1, 2) the at least one thread intersection point (KA-KI) at which the respective longitudinal thread end portion (1, 2) is connected in a materially integral manner to a woven-fabric seam cross thread (A-M) is disposed in at least one of the floats (F10, F11, F12, F13, F20, F21, F22, F23) which is one of the six, in particular one of the four, floats (F10, F11, F12, F13, F20, F21, F22, F23) which directly precede the last float (F10, F11, F12, F13, F20, F21, F22, F23).

3. Woven-fabric belt (100) according to one of the preceding claims, **characterized in that** in the weaving path of the at least some longitudinal thread end portions (1, 2) the at least one thread intersection point (KA-KI), at which the respective longitudinal thread end portion (1, 2) is connected in a materially integral manner to a woven-fabric seam cross thread (AM), is disposed in a float (F10, F11, F12, F13, F20, F21, F22, F23) which is a penultimate float (F10, F11, F12, F13, F20, F21, F22, F23) directly preceding the last float (F10, F11, F12, F13, F20, F21, F22, F23).

4. Woven-fabric belt (100) according to one of the preceding claims, **characterized in that** in the weaving path of the at least some longitudinal thread end portions (1, 2) floats (F10, F11, F12, F13, F20, F21, F22, F23) of dissimilar lengths are formed, wherein the at least one thread intersection point (KA-KI) at which the respective longitudinal thread end portion (1, 2) is connected in a materially integral manner to a woven-fabric seam cross thread (A-M) is disposed in a float (F10, F11, F12, F13, F20, F21, F22, F23) which is of shorter length than other floats (F10, F11, F12, F13, F20, F21, F22, F23).

5. Woven-fabric belt (100) according to one of the preceding claims, **characterized in that** at least one of the further woven-fabric seam cross threads (A-M), which at the thread intersection point (KA-KI) is connected in a materially integral manner to the longitudinal thread end portion (1, 2), is disposed in the last float (F10, F11, F12, F13, F20, F21, F22, F23).

6. Woven-fabric belt (100) according to one of the preceding claims, **characterized in that** the materially integral connection is effected by the influence of laser radiation energy.

7. Woven-fabric belt (100) according to one of the preceding claims, **characterized in that** the longitudinal threads and/or the woven-fabric seam cross threads (A-M) comprise/comprises a first thread type and a second thread type, wherein the first thread type is from a material which absorbs more radiation energy than the material of the second thread type.

8. Woven-fabric belt (100) according to Claim 7, **characterized in that** the woven-fabric seam cross threads (A-M) which at the thread intersection points (KA-KI) are connected in a materially integral manner to the longitudinal thread end portions (1, 2) are threads of the first thread type, and in particular that the longitudinal threads and the remaining cross threads are threads of the second thread type.

9. Woven-fabric belt (100) according to one of the preceding claims, **characterized in that** the woven-fabric belt (100) is formed by only one system of longitudinal threads and/or by only one system of cross threads (AM) .

10. Woven-fabric belt (100) according to one of the preceding claims, **characterized in that** the woven-fabric belt (100) is an endless woven-fabric belt (100) which is formed by a flat-woven main woven-fabric portion and the woven-fabric seam portion (101), wherein the main woven-fabric portion is formed by the longitudinal threads and cross threads (A-M) which are interwoven therewith and which are referred to as main woven-fabric cross threads, and the main woven-fabric portion in the longitudinal extent thereof is delimited by a first and a second face-side portion end, wherein at least some of the longitudinal threads, provide first longitudinal thread end portions (1, 2) provided by the longitudinal thread end portions (1, 2), having a first thread end (5, 6) which in the MD direction protrude beyond the first face-side portion end and/or second longitudinal thread end portions (1, 2) having a second thread end (5, 6), which protrude beyond the second face-side portion end, the two face-side portion ends being interconnected by the woven-fabric seam portion (101) which is formed by collecting the first and second longitudinal thread end portions (1, 2) and interweaving the latter with woven-fabric seam cross threads (A-M).

11. Woven-fabric belt (100) according to Claim 10, **characterized in that** the woven-fabric belt (100) is rendered endless **in that** first and second longitudinal thread end portions (1, 2) are each gathered in pairs while configuring meeting points.

12. Woven-fabric belt (100) according to Claim 10 or 11, **characterized in that** at least some of the first and second longitudinal thread end portions (1, 2) which are gathered in pairs are collectively interwoven with one or a plurality of woven-fabric seam cross threads (A-M).

13. Woven-fabric belt (100) according to Claim 12, **characterized in that** at least some of the first and second longitudinal thread end portions (1, 2) which are gathered in pairs are collectively interwoven with at least one woven-fabric seam cross thread (A-M), wherein the at least one collectively interwoven woven-fabric seam cross thread (A-M) is disposed in the weaving path of the first and in the weaving path of the second longitudinal thread portion (1, 2) in the last float (F10, F11, F12, F13, F20, F21, F22, F23).

14. Woven-fabric belt (100) according to either of the preceding Claims 12 and 13, **characterized in that** at least some of the first and second longitudinal thread end portions (1, 2) which are gathered in pairs are collectively interwoven with at maximum six directly adjacent woven-fabric seam cross threads (A-M), wherein the collectively interwoven woven-fabric seam cross threads (A-M) are disposed in the weaving path of the first longitudinal thread end portion (1, 2) in the last float and in the float (F10, F11, F12, F13, F20, F21, F22, F23) directly preceding the last float (F10, F11, F12, F13, F20, F21, F22, F23), and wherein the collectively interwoven woven-fabric seam cross threads (A-M) are disposed in the weaving path of the second longitudinal thread end portion (1, 2) in the last float and in the float (F10, F11, F12, F13, F20, F21, F22, F23) directly preceding the last float (F10, F11, F12, F13, F20, F21, F22, F23).

15. Woven-fabric belt (100) according to either of the preceding claims, **characterized in that** the woven-fabric seam cross threads (A-M) by which first longitudinal thread end portions (1, 2) are connected in a materially integral manner for dissimilar first longitudinal thread end portions (1, 2) are provided by dissimilar woven-fabric seam cross threads (A-M) and/or **in that** the woven-fabric seam cross threads (A-M) by which second longitudinal thread end portions (1, 2) are connected in a materially integral manner for dissimilar second longitudinal thread end portions (1, 2) are provided by dissimilar woven-fabric seam cross threads (A-M).

## Revendications

1. Bande de tissu (100) destinée à une machine de production et/ou de traitement d'une nappe de matière fibreuse, la bande de tissu comprenant des fils longitudinaux, qui sont entrelacés avec des fils transversaux (A-M) de façon à former des points de croisement de fils (KA-KI), et un côté supérieur (3) et un côté inférieur (4) opposé à celui-ci et une partie de couture de tissu (101), chaque fil longitudinal comportant dans le sens de sa longueur deux parties d'extrémité (1, 2) pourvues d'une extrémité de fil respective (5, 6), la partie de couture de tissu (101) étant formée par entrelacement des parties d'extrémité de fil longitudinal (1, 2) avec des fils transversaux (A-M) appelés fils transversaux de couture de tissu (A-M), au moins certaines des parties d'extrémité de fil longitudinal (1, 2) suivant, lors de l'entrelacement avec les fils transversaux de couture de tissu (A-M), un chemin de tissage le long duquel la partie d'extrémité de fil longitudinal respective (1, 2) forme, lorsque l'on regarde en direction de son extrémité de fil (5, 6), des flottés (F10, F11, F12, F13, F20, F21, F22, F23) alternant de multiple fois sur le côté supérieur (3) et sur le côté inférieur (4) et, entre deux flottés (F10, F11, F12, F13, F20, F21, F22, F23) directement adjacents du côté supérieur (3), un flotté (F10, F11, F12, F13, F20, F21, F22, F23) étant disposé du côté inférieur (4) et inversement, un dernier flotté (F10, F11, F12, F13, F20, F21, F22, F23) avant l'extrémité de fil (5, 6) étant formé, dans le chemin de tissage, sur un côté parmi le côté supérieur et le côté inférieur (3, 4) et la partie d'extrémité de fil longitudinal (1, 2) qui fait suite au dernier flotté (F10, F11, F12, F13, F20, F21, F22, F23) avant l'extrémité de fil (5, 6) étant passée depuis un côté parmi le côté supérieur et le côté inférieur (3, 4) vers l'autre côté parmi le côté supérieur et le côté inférieur (3, 4), et la partie d'extrémité de fil longitudinal (1, 2) étant reliée, à au moins un point de croisement de fils (KA-KI), par liaison de matière à un fil transversal de couture de tissu (A-M) par apport d'énergie de rayonnement, et l'au moins un point de croisement de fils (KA-KI), au niveau duquel la partie d'extrémité de fil longitudinal (1, 2) est reliée par liaison de matière à un fil transversal de couture de tissu (A-M), étant disposé dans au moins un flotté (F10, F11, F12, F13, F20, F21, F22, F23) situé dans le chemin de tissage avant le dernier flotté (F10, F11, F12, F13, F20, F21, F22, F23), **caractérisée en ce qu'**au moins certains fils longitudinaux et/ou au moins certains fils transversaux de couture de tissu ont une forme aplatie en coupe transversale.

2. Bande de tissu (100) selon la revendication 1, **caractérisée en ce que**, dans le chemin de tissage d'au moins certaines parties d'extrémité de fil longitudinal (1, 2), l'au moins un point de croisement de fils (KA-KI), au niveau duquel la partie d'extrémité de fil longitudinal respective (1, 2) est reliée par liaison de matière à un fil transversal de couture de tissu (A-M), est disposé dans au moins un des flottés (F10, F11, F12, F13, F20, F21, F22, F23) qui contient un des six, en particulier quatre, flottés (F10, F11, F12, F13, F20, F21, F22, F23) précédant immédiatement le dernier flotté (F10, F11, F12, F13, F20, F21, F22, F23).

3. Bande de tissu (100) selon l'une des revendications précédentes, **caractérisée en ce que**, dans le chemin de tissage d'au moins certaines parties d'extrémité de fil longitudinal (1, 2), l'au moins un point de croisement de fils (KA-KI), au niveau duquel la partie d'extrémité de fil longitudinal (1,2) est reliée par liaison de matière à un fil transversal de couture de tissu (A-M), est disposé dans un flotté (F10, F11, F12, F13, F20, F21, F22, F23) qui est un avant-dernier flotté (F10, F11, F12, F13, F20, F21, F22, F23) précédant immédiatement le dernier flotté (F10, F11, F12, F13, F20, F21, F22, F23).

4. Bande de tissu (100) selon l'une des revendications précédentes, **caractérisée en ce que**, dans le chemin de tissage d'au moins certaines parties d'extrémité de fil longitudinal (1, 2), des flottés (F10, F11, F12, F13, F20, F21, F22, F23) sont formés avec des longueurs différentes, l'au moins un point de croisement de fils (KA-KI), au niveau duquel la partie d'extrémité de fil longitudinal respective (1, 2) est reliée par liaison de matière à un fil transversal de couture de tissu (A-M), étant disposé dans un flotté (F10, F11, F12, F13, F20, F21, F22, F23) qui a une longueur plus courte que celle des autres flottés (F10, F11, F12, F13, F20, F21, F22, F23) .

5. Bande de tissu (100) selon l'une des revendications précédentes, **caractérisée en ce qu'**au moins un des autres fils transversaux de couture de tissu (A-M), qui est relié par liaison de matière à la partie d'extrémité de fil longitudinal (1, 2) au niveau d'un point de croisement de fils (KA-KI), est disposé dans le dernier flotté (F10, F11, F12, F13, F20, F21, F22, F23).

6. Bande de tissu (100) selon l'une des revendications précédentes, **caractérisée en ce que** la liaison de matière est réalisée par apport d'énergie de rayonnement laser.

7. Bande de tissu (100) selon l'une des revendications précédentes, **caractérisée en ce que** les fils longitudinaux et/ou les fils transversaux de couture de tissu (A-M) comprennent un premier type de fil et un deuxième type de fil, le premier type de fil étant en une matière qui absorbe plus fortement l'énergie de rayonnement que la matière du deuxième type de fil.

8. Bande de tissu (100) selon la revendication 7, **caractérisée en ce que** les fils transversaux de couture de tissu (A-M), qui sont reliés par liaison de matière aux parties d'extrémité de fil longitudinal (1, 2) au niveau de points de croisement de fils (KA-KI), sont des fils du premier type de fil, et en particulier **en ce que** les fils longitudinaux et les autres fils transversaux sont des fils du deuxième type de fil.

9. Bande de tissu (100) selon l'une des revendications précédentes, **caractérisée en ce que** la bande de tissu (100) est formée par un seul système de fils longitudinaux et/ou par un seul système de fils transversaux (A-M).

10. Bande de tissu (100) selon l'une des revendications précédentes, **caractérisée en ce que** la bande de tissu (100) est une bande de tissu sans fin (100) formée par une partie de tissu complet tissée à plat et par la partie de couture de tissu (101), la partie de tissu complet étant formée par les fils longitudinaux et les fils transversaux (A-M), appelés fils transversaux de tissu complet entrelacés avec ceux-ci, et la partie de tissu complet étant délimitée dans son étendue longitudinale par des première et deuxième extrémités de partie côté frontal, au moins certains des fils longitudinaux fournissant des premières parties d'extrémité de fil longitudinal (1, 2) saillant de la première extrémité de partie côté frontal dans la direction MD et pourvues d'une première extrémité de fil (5, 6) et/ou des deuxièmes parties d'extrémité de fil longitudinal (1, 2) saillant de la deuxième extrémité de partie côté frontal et pourvues d'une première extrémité de fil (5, 6), lesquelles sont fournies par les parties de fil longitudinal (1, 2) et les deux extrémités de partie côté frontal étant reliées entre elles par la partie de couture de tissu (101) qui est formée par réunion des première et deuxième parties d'extrémité de fil longitudinal (1, 2) et leur entrelacement avec des fils transversaux de couture de tissu (A-M).

11. Bande de tissu (100) selon la revendication 10, **caractérisée en ce que** la bande de tissu (100) est rendue sans fin par réunion de première et deuxième parties d'extrémité de fil longitudinal (1, 2) par paires pour former des points de liaison.

12. Bande de tissu (100) selon la revendication 10 ou 11, **caractérisée en ce qu'**au moins certaines des premières et deuxièmes parties d'extrémité de fil longitudinal (1, 2) réunies par paire sont entrelacées ensemble avec au moins un fil transversal de couture de tissu (A-M).

13. Bande de tissu (100) selon la revendication 12, **caractérisée en ce qu'**au moins certaines des premières et deuxièmes parties d'extrémité de fil longitudinal (1, 2) réunies par paire sont entrelacées ensemble avec au moins un fil transversal de couture de tissu (A-M), l'au moins un fil transversal de couture de tissu (A-M) entrelacé ensemble étant disposé dans le dernier flotté (F10, F11, F12, F13, F20, F21, F22, F23) dans le chemin de tissage de la première partie d'extrémité de fil longitudinal (1, 2) et dans le chemin de tissage de la deuxième partie d'extrémité de fil longitudinal (1, 2).

14. Bande de tissu (100) selon l'une des revendications précédentes 12 et 13, **caractérisée en ce qu'**au moins certaines des première et deuxième parties d'extrémité de fil longitudinal (1, 2) réunies par paire sont entrelacées ensemble avec un maximum de six fils transversaux de couture de tissu (A-M) directement adjacents, les fils transversaux de couture de tissu (A-M) entrelacés ensemble étant disposés, dans le chemin de tissage de la première partie d'extrémité de fil longitudinal (1, 2), dans le dernier flotté (F10, F11, F12, F13, F20, F21, F22, F23) et dans le flotté (F10, F11, F12, F13, F20, F21, F22, F23) précédant immédiatement le dernier flotté (F10, F11, F12, F13, F20, F21, F22, F23), et les fils transversaux de couture de tissu (A-M) entrelacés ensemble étant disposés, dans le chemin de tissage de la deuxième partie d'extrémité de fil longitudinal (1, 2), dans le dernier flotté (F10, F11, F12, F13, F20, F21, F22, F23) et dans le flotté (F10, F11, F12, F13, F20, F21, F22, F23) précédant immédiatement le dernier flotté (F10, F11, F12, F13, F20, F21, F22, F23).

15. Bande de tissu (100) selon l'une des revendications précédentes, **caractérisée en ce que** les fils transversaux de couture de tissu (A-M), auxquels des premières parties d'extrémité de fil longitudinal (1, 2) sont reliées par liaison de matière, sont fournis par des différents fils transversaux de couture de tissu (A-M) pour différentes premières parties d'extrémité de fil longitudinal (1, 2) et/ou **en ce que** les fils transversaux de couture de tissu (A-M), auxquels des deuxièmes parties d'extrémité de fil longitudinal (1, 2) sont reliées par liaison de matière, sont fournis par différents fils transversaux de couture de tissu (A-M) pour différentes deuxièmes parties d'extrémité de fil longitudinal (1, 2).
